(19) Europäisches Patentamt
European Patent Office
Office européen des brevets

(11) **EP 1 789 956 B1**

(12) **FASCICULE DE BREVET EUROPEEN**

(45) Date de publication et mention
de la délivrance du brevet:
**04.08.2010 Bulletin 2010/31**

(21) Numéro de dépôt: **05802589.1**

(22) Date de dépôt: **14.09.2005**

(51) Int Cl.:
$G10L\ 21/02^{(2006.01)}$

(86) Numéro de dépôt international:
**PCT/FR2005/002284**

(87) Numéro de publication internationale:
**WO 2006/032760 (30.03.2006 Gazette 2006/13)**

(54) **PROCEDE DE TRAITEMENT D'UN SIGNAL SONORE BRUITE ET DISPOSITIF POUR LA MISE EN OEUVRE DU PROCEDE**

VERFAHREN ZUM VERARBEITEN EINES RAUSCHBEHAFTETEN TONSIGNALS UND EINRICHTUNG ZUR IMPLEMENTIERUNG DES VERFAHRENS

METHOD OF PROCESSING A NOISY SOUND SIGNAL AND DEVICE FOR IMPLEMENTING SAID METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.09.2004 FR 0409819**

(43) Date de publication de la demande:
**30.05.2007 Bulletin 2007/22**

(73) Titulaire: **FRANCE TELECOM
75015 Paris (FR)**

(72) Inventeurs:
• **MARRO, Claude
F-22220 Plouguiel (FR)**
• **PLAPOUS, Cyril
F-22700 PERROS GUIREC (FR)**
• **SCALART, Pascal
F-22560 Trebeurden (FR)**

(74) Mandataire: **Attali, Pascal
Cabinet Plasseraud
52 rue de la Victoire
75440 Paris Cedex 09 (FR)**

(56) Documents cités:
**FR-A- 2 768 546     GB-A- 2 398 913**

• **PATENT ABSTRACTS OF JAPAN vol. 2003, no. 12, 5 décembre 2003 (2003-12-05) -& JP 2003 280696 A (MATSUSHITA ELECTRIC IND CO LTD), 2 octobre 2003 (2003-10-02) & JP 2003 280696 A (MATSUSHITA ELECTRIC IND CO LTD) 2 octobre 2003 (2003-10-02)**
• **KAZAMA, TOHYAMA: "Estimation of Speech Components by ACF Analysis in a Noisy Environment" JOURNAL OF SOUND AND VIBRATION, vol. 241, no. 1, 2001, pages 41-52, XP1205574**

## Description

La présente invention concerne le traitement de signaux sonores bruités. Elle concerne en particulier la réduction du bruit présent dans de tels signaux.

Des techniques de réduction de bruit, c'est-à-dire d'un signal perturbateur, au sein d'un signal sonore sont connues. Elles visent à tenir compte de l'environnement acoustique dans lequel le signal sonore apparaît pour améliorer la qualité et l'intelligibilité de ce signal. Ces techniques consistent à extraire l'information utile du signal sonore considéré en effectuant un traitement sur ce signal bruité. De telles techniques s'appliquent par exemple à des communications parlées, dans des applications telles que la téléphonie, la téléconférence, la visioconférence où le signal sonore est alors transmis entre plusieurs interlocuteurs. Elles s'appliquent en outre pour des applications de prise de son en milieu bruité, ou encore de reconnaissance vocale dont les performances sont fortement altérées lorsque le signal vocal est prononcé dans un environnement bruyant.

Ces techniques consistent le plus souvent à estimer une fonction de transfert d'un filtre de réduction de bruit, puis à réaliser un traitement de filtrage à partir d'une multiplication dans le domaine spectral. Elles relèvent des approches dites de "réduction de bruit par atténuation spectrale à court-terme".

Selon ces techniques, le signal sonore considéré x(n) comprend une composante de signal utile s(n) et une composante de bruit b(n), n représentant un indice temporel en temps discret. On notera cependant qu'une représentation du signal en temps continu pourrait aussi être adoptée. Le signal x(n) est organisé en trames x(n,k) successives de longueur constante et d'indice k. Chacune de ces trames est tout d'abord multipliée par une fenêtre de pondération permettant d'améliorer l'estimation ultérieure des grandeurs spectrales nécessaires au calcul du filtre de réduction de bruit. Chaque trame ainsi fenêtrée est ensuite analysée dans le domaine spectral, par exemple à l'aide d'une transformation de Fourier discrète ou rapide. Cette opération est appelée transformation de Fourier à court terme (TFCT).

La représentation fréquentielle X(k,f) ainsi obtenue du signal observé, où f est un indice de fréquence, permet à la fois d'estimer la fonction de transfert H(k,f) du filtre de réduction de bruit, et d'appliquer ce filtre dans le domaine spectral par simple multiplication entre cette fonction de transfert et le spectre à court-terme du signal bruité. Le résultat du filtrage peut ainsi s'écrire :

$$\hat{S}(k,f) = H(k,f)X(k,f).$$

Un retour dans le domaine temporel du signal obtenu est ensuite effectué par une transformée spectrale inverse. Le signal temporel correspondant est enfin synthétisé par une technique de recouvrement et d'addition de blocs (OLA pour "overlap add") ou bien par une technique de sauvegarde de blocs (OLS pour "overlap save"). Cette opération de reconstruction du signal dans le domaine temporel est appelée transformation de Fourier à court terme inverse (TFCTI).

On trouvera une description détaillée des méthodes d'atténuation spectrale à court terme dans les références : J.S. Lim, A.V. Oppenheim, "Enhancement and bandwidth compression of noisy speech", Proceedings of the IEEE, vol. 67, pp. 1586-1604, 1979 ; et R.E. Crochiere, L.R. Rabiner, "Multirate digital signal processing", Prentice Hall, 1983.

L'atténuation spectrale à court-terme H(k,f) appliquée au signal d'observation X(k,f) sur le segment temporel d'indice k et à la composante fréquentielle f, est généralement déterminée à partir de l'estimation du rapport signal à bruit local RSB(k,f). Une caractéristique commune à l'ensemble des règles de suppression réside dans leur comportement asymptotique, donné par:

$$H(k,f) \approx 1 \ \ pour \ \ RSB(k,f) >> 1$$

$$H(k,f) \approx 0 \ \ pour \ \ RSB(k,f) << 1.$$

Dans la plupart des techniques, on fait les hypothèses suivantes : le bruit et le signal utile sont statistiquement décorrélés, le signal utile est intermittent (présence de périodes de silence) et l'oreille humaine n'est pas sensible à la phase du signal (qui n'est en général pas modifiée par le traitement).

Parmi les règles de suppression couramment employées, on peut citer à titre d'exemple la soustraction spectrale en puissance, la soustraction spectrale en amplitude et la mise en oeuvre directe du filtre de Wiener. Pour ces règles, l'estimation à court-terme de la composante fréquentielle f du signal utile de parole s'écrit respectivement :

$$\hat{S}_{SSP}(k,f) = \sqrt{\frac{\gamma_{ss}(k,f)}{\gamma_{ss}(k,f) + \gamma_{bb}(k,f)}} \ X(k,f)$$

(1)

pour la soustraction spectrale en puissance (voir l'article précité de J.S. Lim et A.V. Oppenheim) ;

$$\hat{S}_{SSA}(k,f) = \left[1 - \sqrt{\frac{\gamma_{bb}(k,f)}{\gamma_{ss}(k,f) + \gamma_{bb}(k,f)}}\right] \ X(k,f)$$

(2)

pour la soustraction spectrale en amplitude (voir S.F. Boll, "Suppression of acoustic noise in speech using spectral subtraction", IEEE Trans. on Audio, Speech and Signal Processing, vol. 27, N°. 2, pp. 113-120, Avril 1979) ; et

$$\hat{S}_{Wiener}(k,f) = \frac{\gamma_{ss}(k,f)}{\gamma_{ss}(k,f) + \gamma_{bb}(k,f)} X(k,f)$$

(3)

pour le filtrage de Wiener (cf. article précité de J.S. Lim et A.V. Oppenheim).

Dans ces expressions, $\gamma_{ss}(k,f)$ et $\gamma_{bb}(k,f)$ représentent respectivement les densités spectrales de puissance du signal utile et du bruit présents au sein de la composante fréquentielle f du signal d'observation X(k,f) sur la fenêtre temporelle d'indice k.

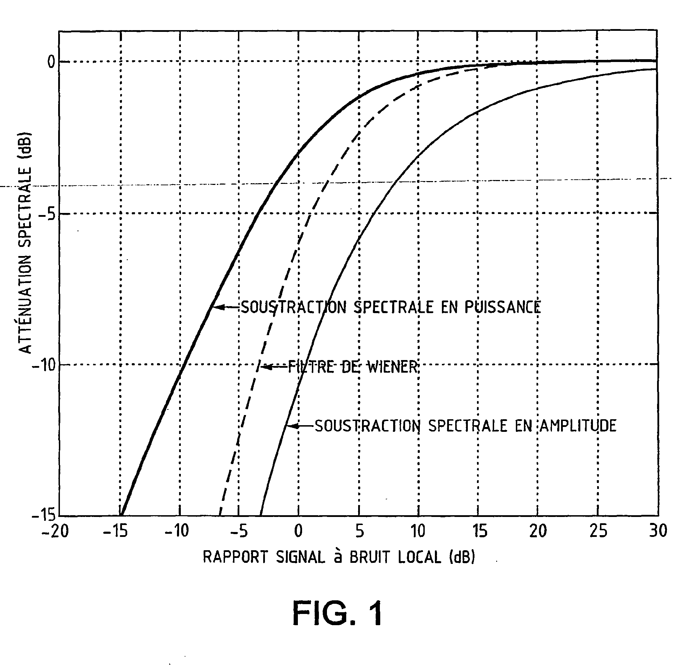

A partir des expressions ci-dessus, il est possible d'étudier, en fonction du rapport signal à bruit local mesuré sur une composante fréquentielle donnée f, le comportement de l'atténuation spectrale appliquée au signal bruité. Ces courbes sont tracées sur la figure 1 pour les trois règles de suppression à court-terme susmentionnées. On peut constater que l'ensemble des règles donne une atténuation sensiblement identique lorsque le rapport signal à bruit local est important (partie à droite de la figure 1). La règle de soustraction en puissance optimale au sens du maximum de vraisemblance pour des modèles gaussiens (voir O. Cappé, "Elimination of the musical noise phenomenon with the Ephraim and Malah noise suppressor", IEEE Trans. on Speech and Audio Processing, vol. 2, N°. 2, pp. 345-349, Avril 1994) demeure celle pour laquelle la puissance du bruit reste la plus importante en sortie de traitement. Pour les trois règles de suppression, nous pouvons constater qu'une faible variation du rapport signal à bruit local autour d'une valeur de coupure suffit à faire passer du cas de l'atténuation totale (H(k,f)≈0) au cas d'une modification spectrale négligeable (H(k,f)≈1).

Cette dernière propriété constitue l'une des causes du phénomène qualifié de "bruit musical". En effet, le bruit ambiant, comprenant à la fois des composantes déterministes et aléatoires, ne peut être caractérisé que durant les périodes de non-activité vocale. Du fait de la présence de composantes aléatoires, il existe de très fortes variations entre la contribution réelle d'une composante fréquentielle f du bruit pendant les périodes d'activité vocale et son estimation en moyenne réalisée sur plusieurs trames pendant les instants de non-activité vocale. Du fait de cette différence, l'estimation du rapport signal à bruit local peut fluctuer autour du niveau de coupure et donc engendrer en sortie de traitement des composantes spectrales qui apparaissent puis disparaissent et dont la durée de vie moyenne ne dépasse pas statistiquement l'ordre de grandeur de la fenêtre d'analyse considérée. La généralisation de ce comportement sur l'ensemble de la bande passante introduit un bruit résiduel audible et gênant.

Plusieurs études se sont attachées à réduire l'influence de ce bruit résiduel. Les solutions préconisées se déclinent suivant plusieurs axes : un moyennage des estimées à court-terme (cf. article précité S.F. Boll), une surestimation du spectre de puissance du bruit (voir M. Berouti et al, "Enhancement of speech corrupted by acoustic noise", Int. Conf. on Speech, Signal Processing, pp. 208-211, 1979; et P. Lockwood, J. Boudy, "Experiments with a non-linear spectral subtractor, hidden Markov models and the projection for robust speech recognition in cars", Proc. of EUSIPCO'91, pp. 79-82, 1991), ou bien encore une poursuite des minima de la densité spectrale de bruit (voir R. Martin, "Spectral subtraction based on minimum statistics", in Signal Processing VII : Theories and Applications, EUSIPCO'94, pp. 1182-1185, Sept. 1994).

Une solution relativement efficace pour supprimer le bruit musical consiste en un estimateur de la densité spectrale de puissance du signal utile dit à "décision dirigée" (voir Y. Ephraim, et D. Malah, "Speech enhancement using a minimun mean square error short-time spectral amplitude estimator", IEEE Trans. on Audio, Speech and Signal Processing, vol. 32, N° 6, pp. 1109-1121, 1984 et article O. Cappé précité). Cet estimateur réalise un compromis entre la densité spectrale de puissance du signal utile instantanée et à long terme, ce qui permet d'éliminer efficacement le bruit musical. Il est en outre connu d'améliorer cette solution en rattrapant le retard inhérent à cet estimateur (voir FR2820227 et C. Plapous, C. Marro, L. Mauuary, P. Scalart, "A Two-Step Noise Reduction Technique ", ICASSP, Mai 2004).

Plusieurs études ont également porté sur l'établissement de nouvelles règles de suppression basées sur des modèles statistiques des signaux de parole et de bruit additif. Ces études ont permis d'introduire de nouveaux algorithmes qualifiés d'algorithmes à "décisions souples" car ils possèdent un degré de liberté supplémentaire par rapport aux méthodes classiques (voir R.J. Mac Aulay, M.L. Malpass, "Speech enhancement using a soft-decision noise suppression filter", IEEE trans. on Audio, Speech and Signal Processing, vol. 28, N˚. 2, pp. 137-145, Avril 1980, Y. Ephraim, D. Malah, "Speech enhancement using optimal non-linear spectral amplitude estimation", Int. Conf. on Speech, Signal Processing, pp. 1118-1121, 1983, et article Y. Ephraim, D. Malah, "Speech enhancement using a minimun mean square error short-time spectral amplitude estimator", précité).

Comme cela a été mentionné plus haut, le calcul de l'atténuation spectrale à court-terme repose sur l'estimation du rapport signal à bruit sur chacune des composantes spectrales. A titre d'exemple, les équations données plus haut font chacune intervenir la quantité suivante :

$$RSB(k,f) = \frac{\gamma_{ss}(k,f)}{\gamma_{bb}(k,f)}.$$

Ainsi, les performances de la technique de réduction de bruit, notamment en termes de distorsions et de réduction effective du niveau de bruit, sont gouvernées par la pertinence de cet estimateur du rapport signal à bruit.

Ce défaut constitue la limitation majeure des systèmes de débruitage de parole connus. En effet, les systèmes de débruitage actuels sont incapables de débruiter les harmoniques caractérisées par un rapport signal à bruit trop faible. En pratique, les algorithmes de débruitage utilisent le RSB pour détecter la présence ou l'absence d'une composante de parole pour chaque fréquence. Si le RSB estimé est trop défavorable, alors l'algorithme considère qu'il n'y a pas de composante de signal et la supprime. Ainsi, des harmoniques peuvent être détruites par les systèmes de débruitage connus, bien qu'on sache a priori que de telles harmoniques doivent exister. Or, il faut noter que dans la majorité des langues, les sons voisés (harmoniques) représentent une très grande partie des sons prononcés.

FR 2 768 546 divulgue un procédé de débruitage d'un signal de parole numérique. Dans ce procédé, un filtre permet de protéger une harmonique, mais sans la débruiter. D'autres différences apparaissent, notamment dans le calcul du filtre.

Un but de la présente invention est de surmonter la limitation des systèmes de débruitage connus.

Un autre but de l'invention est d'améliorer les performances des méthodes de réduction de bruit.

Un autre but de l'invention est de proposer un traitement de signal sonore qui ne distorde pas le signal de façon excessive. En particulier, le traitement du signal effectué permet de préserver tout ou partie des harmoniques comprises dans ce signal.

Un autre but de l'invention est de limiter l'apparition de bruit musical à l'issue du traitement du signal sonore.

Un autre but de l'invention est d'obtenir une bonne estimation du peigne harmonique d'un signal utile.

L'invention propose ainsi un procédé de traitement d'un signal sonore bruité organisé en trames successives selon la revendication 1.

Un tel traitement du signal sonore bruité permet ainsi d'obtenir une régénération d'harmonicité en sortie d'un premier filtre de réduction de bruit appliqué au signal. La trame du second signal ainsi obtenue est construite de manière à éliminer les distorsions de la trame du signal débruité qui ont pu apparaître lors du premier filtrage.

Ce traitement permet d'obtenir une bonne estimation du peigne harmonique du signal utile, qui peut faire l'objet d'une exploitation ultérieure.

De façon avantageuse, dans le domaine du débruitage, le procédé comprend en outre les étapes suivantes :

- calculer un second filtre de réduction de bruit à partir de la densité spectrale de puissance du bruit estimée et d'une combinaison des puissances de la première estimation débruitée de ladite trame et de la trame du second signal obtenue ;
- filtrer ladite trame du signal sonore bruité, à l'aide du second filtre de réduction de bruit calculé, pour obtenir une seconde estimation débruitée de ladite trame ; et
- synthétiser la seconde estimation débruitée de ladite trame.

Dans ce mode de réalisation, le second filtre de réduction de bruit est calculé de manière à préserver les harmoniques, car il est piloté par le signal issu de la régénération d'harmonicité. La seconde estimation débruitée de ladite trame obtenue à l'issue du second filtrage est ainsi plus performante que celles obtenues dans les systèmes de réduction de bruit classiques, où les harmoniques du signal d'entrée sont détruites ou du moins détériorées.

Le calcul du premier et, le cas échéant, du second filtre de réduction de bruit peut comprendre une première passe mettant en oeuvre une technique d'atténuation spectrale à court-terme. A titre d'illustration, on peut citer par exemple les techniques suivantes : une soustraction spectrale en puissance, une soustraction spectrale en amplitude et un filtre de Wiener en boucle ouverte, etc. De manière avantageuse, il peut également comprendre une seconde passe mettant en oeuvre une technique d'atténuation spectrale à court-terme, comme par exemple une soustraction spectrale en puissance, une soustraction spectrale en amplitude et un filtre de Wiener en boucle ouverte, etc., et utiliser une estimation de la densité spectrale de puissance du signal utile correspondant à ladite trame tenant compte du calcul effectué lors de la première passe.

De façon avantageuse, l'obtention d'une trame d'un second signal comprenant des harmoniques sensiblement aux mêmes positions que le signal utile correspondant à ladite trame du signal sonore bruité comprend l'application d'une fonction non linéaire à la première estimation débruitée de ladite trame du signal sonore bruité lorsque ladite première estimation est dans le domaine temporel, et l'application d'une convolution circulaire entre la première estimation débruitée de ladite trame du signal sonore bruité et d'une transformée dans le domaine fréquentiel d'une fonction non linéaire lorsque ladite première estimation est dans le domaine fréquentiel.

La fonction non linéaire peut être par exemple l'une parmi : une fonction de redressement mono alternance, une valeur absolue, un maximum entre ladite première estimation débruitée de ladite trame du signal sonore bruité et un seuil, et un minimum entre ladite première estimation débruitée de ladite trame du signal sonore bruité et un seuil.

L'invention propose en outre un dispositif de traitement de signaux sonores bruités, comprenant des moyens agencés pour mettre en oeuvre le procédé susmentionné.

L'invention propose aussi un programme d'ordinateur sur un support d'informations, ce programme comportant des instructions adaptées à la mise en oeuvre du procédé susmentionné, lorsque le programme est chargé et exécuté par des moyens informatiques.

D'autres particularités et avantages de la présente invention apparaîtront dans la description ci-après d'exemples de réalisation non limitatifs, en référence aux dessins annexés, dans lesquels :

- la figure 1, déjà commentée, est un schéma comparant le comportement de trois règles de suppression à court-terme connues;
- la figure 2 est un schéma montrant différents blocs fonctionnels aptes à mettre en oeuvre un mode de réalisation de l'invention ;
- la figure 3 est un schéma montrant un exemple de restauration des harmoniques perdues dans un signal débruité ;
- la figure 4 est un schéma montrant l'effet de la restauration d'harmoniques dans un signal selon un mode de réalisation de l'invention ; et
- la figure 5 est un schéma montrant un exemple d'estimation d'un second filtre de réduction de bruit selon un mode de réalisation de l'invention.

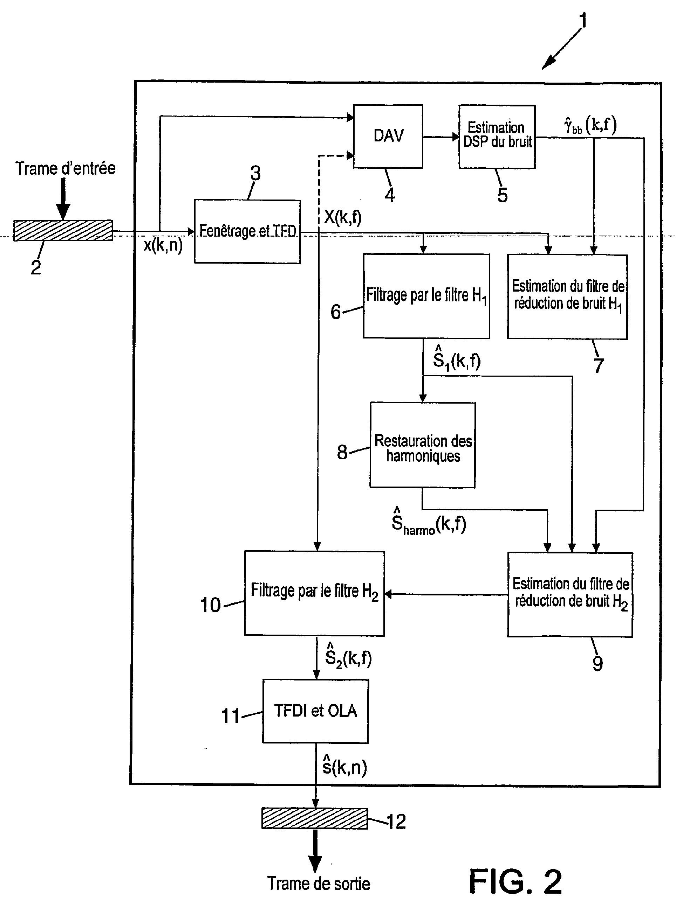

La figure 2 montre un dispositif 1 selon un mode de réalisation de l'invention. Une trame courante 2 d'un signal sonore bruité entre dans le dispositif 1 pour y subir un traitement. Cette trame est désignée par x(k,n) selon les notations introduites plus haut.

Le dispositif 1 comprend une unité d'analyse 3 dont le rôle est de réaliser le passage de la trame courante du signal bruité x(k,n) dans le domaine fréquentiel X(k,f). La trame est dans un premier temps multipliée par une fenêtre de pondération w(n) qui délivre le signal $x_w(k,n)$ :

$$x_w(k,n) = w(n)x(k,n).$$

Le passage dans le domaine fréquentiel est ensuite réalisé en utilisant une transformée de Fourier discrète (TFD), soit :

$$X(k,f) = TFD\big(x_w(k,n)\big).$$

La TFD en question peut avantageusement être mise en oeuvre par une transformée de Fourier rapide (ou FFT pour "Fast Fourier Transform"). Toutefois, d'autres transformations vers le domaine fréquentiel, telles que la transformée en ondelettes sont également possibles. Il est en de même pour les opérations inverses correspondantes, c'est-à-dire les transformées de Fourier discrète inverse (TFDI) qui seront mentionnées ultérieurement, pour le retour dans le domaine temporel.

Une fonction 4 de détection d'activité vocale (DAV) peut par ailleurs avantageusement être mise en oeuvre sur la trame courante 2. La DAV permet de savoir quand mettre à jour l'estimation de la densité spectrale de puissance (DSP) du bruit. Ainsi, pour chaque trame $k_b$ de "bruit seul" détectée par la DAV, la densité spectrale de puissance de bruit $\hat{\gamma}_{bb}(k_b, f)$ est estimée par un bloc fonctionnel 5 suivant l'expression récursive :

$$\hat{\gamma}_{bb}(k_b, f) = \alpha(k_b)\hat{\gamma}_{bb}(k_b - 1, f) + (1 - \alpha(k_b))|X(k_b, f)|^2.$$

Le paramètre $\alpha(k_b)$ contrôle le facteur de lissage. Il peut varier au cours du temps.

Si la trame courante 2 n'est pas détectée comme une trame de bruit, alors l'estimation de la densité spectrale de puissance du bruit est figée, c'est-à-dire qu'on conserve la dernière valeur de DSP obtenue pour une trame de bruit précédente.

On notera que l'estimation de $\hat{\gamma}_{bb}(k_b, f)$ n'est pas limitée à cet estimateur à lissage exponentiel, tout autre estimateur de densité spectrale de puissance peut-être utilisé.

Tout type de DAV peut être utilisé, que celle-ci opère dans le domaine temporel ou dans le domaine fréquentiel. Il est même possible de se passer d'une telle détection d'activité vocale.

Une estimation d'un premier filtre de réduction de bruit est alors effectuée par le bloc fonctionnel 7 de la figure 2. La fonction de transfert de ce premier filtre de réduction de bruit est avantageusement estimée dans le domaine fréquentiel grâce à une technique en deux passes (voir FR2820227 et C. Plapous, C. Marro, L. Mauuary, P. Scalart, "A Two-Step Noise Reduction Technique ", ICASSP, Mai 2004 précité). Dans la première passe, le filtre ayant la fonction de transfert suivante est calculé :

$$\hat{H}_{step1}(k, f) = f_{step1}(\hat{\gamma}_{ss}(k, f), \hat{\gamma}_{bb}(k, f)).$$

Cette expression de la fonction de transfert du filtre est une expression mathématique qui dépend de la DSP du signal utile $\hat{\gamma}_{ss}(k, f)$ et de celle du bruit $\hat{\gamma}_{bb}(k, f)$. En ce sens, la fonction $f_{step1}$ peut être choisie selon une technique d'atténuation spectrale à court-terme, pour que $H_{step1}(k, f)$ mette en oeuvre par exemple la règle de soustraction spectrale en puissance (équation (1)), la règle de soustraction spectrale en amplitude (équation (2)), celle du filtre de Wiener en boucle ouverte (équation (3)), etc. Toute autre règle de suppression de bruit en fréquence peut également être mise en oeuvre pour estimer $\hat{H}_{step1}(k, f)$.

Le calcul de la densité spectrale de puissance de bruit $\hat{\gamma}_{bb}(k_b, f)$ a été détaillé plus haut. Pour ce qui est de la grandeur spectrale $\hat{\gamma}_{ss}(k, f)$, elle ne peut être obtenue directement du fait du mélange du signal et du bruit pendant les périodes d'activité vocale. Pour la calculer, un estimateur à décision dirigée est utilisé (voir Y. Ephraim, D. Malah, "Speech enhancement using a minimum mean square error short-time spectral amplitude estimator", précité), conformément à l'expression suivante :

$$\hat{\gamma}_{ss}(k, f) = \beta(k) |\hat{S}(k - 1, f)|^2 + (1 - \beta(k)) P[|X(k, f)|^2 - \hat{\gamma}_{bb}(k, f)],$$

où $\beta(k)$ est un paramètre barycentrique pouvant varier au cours du temps et $\hat{S}(k-1,f)$ est le spectre du signal utile estimé relativement à la trame précédente d'indice k-1. La fonction P, qui assure le seuillage de la grandeur $(|X(k,f)|^2 - \hat{\gamma}_{bb}(k, f))$ qui risque d'être négative en cas d'erreur d'estimation, est donnée par :

$$P[z(k, f)] = \begin{cases} z(k, f) & \text{si } z(k, f) > 0 \\ 0 & \text{sinon.} \end{cases}$$

On notera que l'estimation de $\hat{\gamma}_{ss}(k, f)$ n'est pas limitée à cet estimateur à décision dirigée. En effet un estimateur à lissage exponentiel ou tout autre estimateur de densité spectrale de puissance peut-être utilisé.

La fonction de transfert $\hat{H}_{step1}(k, f)$ peut ensuite être réutilisée pour affiner l'estimation de la DSP du signal utile

$\hat{\gamma}_{ss}(k, f)$. On obtient alors la grandeur $\hat{\gamma}_{ss2}(k, f)$ donnée par :

$$\hat{\gamma}_{ss2}(k,f) = \left| \hat{H}_{step1}(k,f) X(k,f) \right|^2 .$$

La deuxième passe consiste alors au calcul de l'estimateur $\hat{H}_1(k, f)$ de la fonction de transfert du premier filtre de réduction de bruit à partir de $\hat{\gamma}_{ss2}(k, f)$, soit:

$$\hat{H}_1(k,f) = f_{step2}\left( \hat{\gamma}_{ss2}(k,f), \hat{\gamma}_{bb}(k,f) \right).$$

Ce calcul en deux passes, dont la particularité réside dans une mise à jour "plus rapide" de la DSP du signal utile $\hat{\gamma}_{ss}(k, f)$, confère au premier filtre de réduction de bruit $\hat{H}_1(k, f)$ deux avantages. D'une part, on obtient un suivi plus rapide des non-stationnarités du signal utile, en particulier lors des variations rapides de son enveloppe temporelle (e.g. des attaques ou des extinctions du signal de parole lors d'une transition silence/parole). D'autre part, le filtre de réduction de bruit est mieux estimé, ce qui se traduit par un accroissement des performances de la méthode.

$\hat{H}_{step1}(k, f)$ et $H_1(k, f)$ peuvent mettre en oeuvre une technique d'atténuation spectrale à court-terme, comme par exemple la règle de soustraction spectrale en puissance (équation (1)), la règle de soustraction spectrale en amplitude (équation (2)), ou encore celle du filtre de Wiener en boucle ouverte (équation (3)). Toute autre règle de suppression de bruit en fréquence peut être également mise en oeuvre pour estimer $H_{step1}(k, f)$ et $H_1(k, f)$. Bien entendu, il est aussi possible de se limiter à la première passe, sans mettre en oeuvre la deuxième.

Un filtrage est alors réalisé par le bloc fonctionnel 6 du dispositif 1, selon le premier filtre calculé $H_1(k, f)$. Il peut être effectué dans le domaine fréquentiel, ce qui correspond à multiplier deux spectres. En l'état, cela équivaut à une opération de convolution circulaire dans le domaine temporel. Il faut ainsi prendre certaines précautions pour éviter des distorsions dues au repliement temporel qui se traduisent à l'écoute par des clics au rythme des trames. Ainsi, pour satisfaire à la contrainte de convolution linéaire, il est nécessaire à la fois d'ajouter un certain nombre d'échantillons nuls à chaque trame d'entrée (technique dite du "zero padding") et de limiter le support temporel de la réponse impulsionnelle du filtre de réduction de bruit (ce qui peut être effectué dans le domaine temporel ou bien fréquentiel).

On note que, pour limiter le support temporel de la réponse impulsionnelle du filtre de réduction de bruit, on peut introduire une contrainte dans le domaine temporel, ce qui nécessite :

i) une première transformation spectrale "inverse" permettant d'obtenir la réponse impulsionnelle $h_1(k, n)$ à partir de la connaissance de la fonction de transfert du filtre $H_1(k, f)$,

ii) une limitation du nombre de points de cette réponse impulsionnelle, pour obtenir un filtre temporel tronqué $h_1'(k,n)$.

iii) une seconde transformation spectrale "directe" permettant d'obtenir la fonction de transfert modifiée du filtre $H_1'(k,f)$ à partir de la réponse impulsionnelle avec contrainte $h_1'(k,n)$.

La fonction de transfert du filtre de réduction de bruit $\hat{H}_1(k, f)$ (fréquentielle) étant disponible, la réponse impulsionnelle $\hat{h}_1(k, n)$ (temporelle) est obtenue au moyen d'une transformée de Fourier discrète inverse (TFDI), soit :

$$\hat{h}_1(k,n) = TFDI\left( \hat{H}_1(k,f) \right).$$

Cette réponse impulsionnelle est ensuite limitée temporellement en sélectionnant et pondérant les $L_{filt1}$ coefficients les plus significatifs par une fenêtre $w_{filt1}$ :

$$\hat{h}_1^{'}(k,n) = w_{filt1}(n)\hat{h}_1(k,n).$$

Cette limitation du support temporel du filtre de réduction de bruit présente un double avantage. D'une part, elle permet d'éviter les problèmes de repliement temporel (respect de la convolution linéaire). D'autre part, elle assure un lissage permettant d'éviter les effets d'un filtre trop agressif.

La fonction de transfert du filtre de réduction de bruit $H_1^{'}(k,f)$ est ensuite obtenue par transformée de Fourier discrète (TFD):

$$\hat{H}_1^{'}(k,f) = TFD\left(\hat{h}_1^{'}(k,n)\right).$$

Finalement, la première version débruitée du signal bruité est obtenue par filtrage fréquentiel, c'est-à-dire en multipliant le spectre du signal bruité et la fonction de transfert du filtre de réduction de bruit, soit :

$$\hat{S}_1(k,f) = \hat{H}_1^{'}(k,f)X(k,f).$$

Cette étape de filtrage fréquentiel peut aussi être réalisée de façon équivalente par un filtrage temporel, c'est-à-dire en filtrant directement $x_w(k, n)$ par $\hat{h}_1^{'}(k,n)$, puis en faisant une transformée de Fourier discrète (TFD) du résultat.

Cette première estimation du signal utile $\hat{S}_1(k, f)$ possède des distorsions audibles car certaines harmoniques ont été supprimées par le filtre de réduction de bruit $H_1^{'}(k,f)$, comme expliqué en introduction. Bien entendu, le niveau de distorsion est directement lié au RSB. Plus le bruit est puissant dans une zone fréquentielle, plus les harmoniques de cette zone sont sujettes à dégradation.

Pour pallier cet inconvénient, un bloc fonctionnel 8 du dispositif 1 représenté sur la figure 2, crée un signal artificiel $\hat{S}_{harmo}(k, f)$ qui possède des harmoniques là où celles-ci avaient été détruites ou très fortement atténuées.

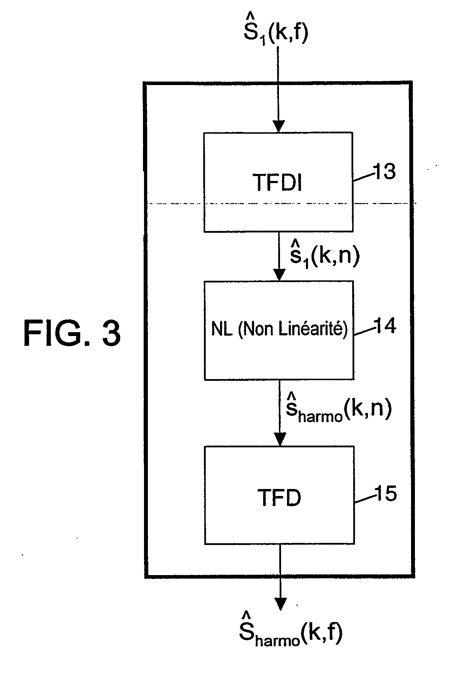

Le signal $\hat{S}_{harmo}(k, f)$ peut être obtenu dans le domaine temporel ou dans le domaine fréquentiel. Dans le domaine temporel, il est possible de redonner de l'harmonicité à un signal en lui appliquant une non linéarité, par exemple une fonction parmi : une fonction de redressement mono alternance, une valeur absolue, un minimum/maximum par rapport à un seuil, etc. Si l'on note NL la fonction non linéaire utilisée, comme illustré à l'étape 14 de la figure 3, on a :

$$\hat{s}_{harmo}(k,n) = NL\left(\hat{s}_1(k,n)\right),$$

où $\hat{s}_1(k, n)$ est obtenu, selon l'étape 13 de la figure 3, par transformée de Fourier discrète inverse (TFDI) :

$$\hat{s}_1(k,n) = TFDI\left(\hat{S}_1(k,f)\right).$$

On obtient ensuite $\hat{S}_{harmo}(k, f)$, comme indiqué à l'étape 15 de la figure 3, par transformée de Fourier discrète (TFD) :

$$\hat{S}_{harmo}\left(k,f\right)=TFD\left(\hat{s}_{harmo}\left(k,n\right)\right).$$

On notera que les harmoniques sont recréées aux mêmes positions que celles du signal utile. Ceci est implicitement assuré par le fait qu'une non linéarité temporelle est utilisée pour les restaurer.

On notera en outre que, dans le cas où la non linéarité est appliquée dans le domaine temporel, il est possible d'éviter le passage dans le domaine fréquentiel en appliquant la non linéarité au signal $\hat{s}_1(k, n)$ obtenu directement par la convolution de $x_w(k, n)$ et $\hat{h}_1'(k,n)$.

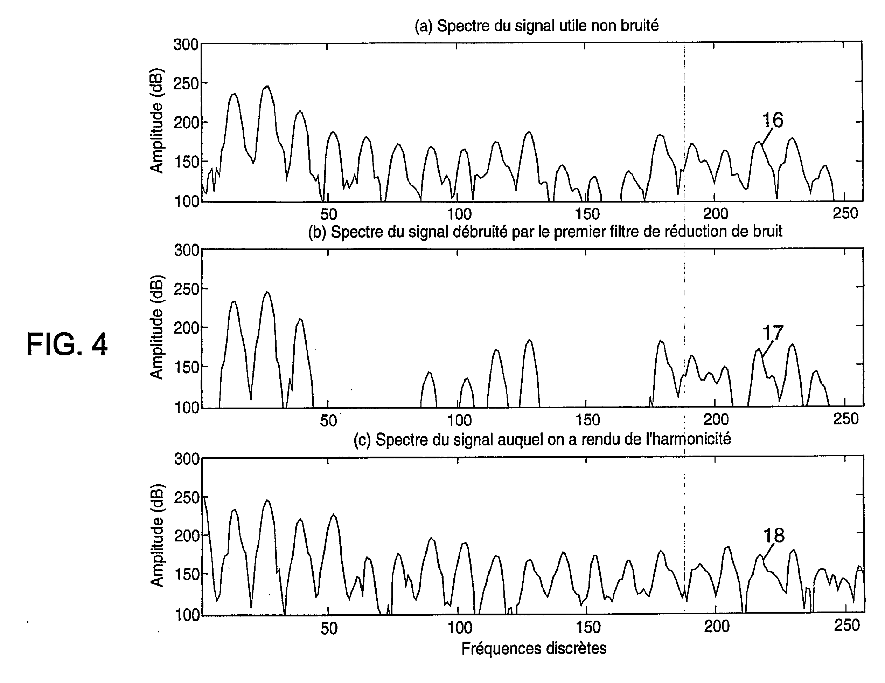

La figure 4 illustre l'effet et l'intérêt de la non linéarité. Le premier spectre (courbe 16) correspond à une trame du signal utile non bruité et sert de référence. Le second spectre (courbe 17) correspond au signal $\hat{S}_1(k,f)$. Il apparaît clairement sur ce second spectre que certaines harmoniques ont été complètement détruites et d'autres dégradées. Le dernier spectre (courbe 18) correspond au signal $\hat{S}_{harmo}(k, f)$ mentionné plus haut. Il apparaît que la non linéarité appliquée au signal $\hat{s}_1(k, n)$ a effectivement permis de recréer les harmoniques manquantes dans le signal $\hat{s}_{harmo}(k, n)$. Le spectre de ce signal, $\hat{S}_{harmo}(k, f)$, possède donc des informations d'harmonicité très utiles notamment pour calculer un nouveau filtre de réduction de bruit qui sera à même de préserver les harmoniques que les techniques de réduction de bruit classiques détruisent.

La non linéarité temporelle possède un équivalent fréquentiel qui consiste à réaliser une convolution circulaire entre le spectre du signal $\hat{S}_1(k, f)$ et le spectre d'un signal qui possède la même structure harmonique (au niveau des positions des harmoniques) que le signal utile. Un tel spectre peut par exemple être obtenu grâce au signal temporel d(k,n) qui correspond à une fonction de $\hat{s}_1(k,n)$. On peut donc aussi obtenir le signal $\hat{S}_{harmo}(k, f)$ dans le domaine fréquentiel, de la façon suivante :

$$\hat{S}_{harmo}\left(k,f\right)=\hat{S}_1\left(k,f\right)\otimes TFD\left(d(k,n)\right),$$

où le signe $\otimes$ correspond à l'opérateur de convolution circulaire. Si la non linéarité temporelle choisie est la fonction de valeur absolue, par exemple, alors le signal d(k,n) peut s'exprimer ainsi, la fonction sgn désignant le signe de la valeur à laquelle elle est appliquée :

$$d(k,n)=\mathrm{sgn}(\hat{s}_1(k,n)).$$

Ainsi, le signal $\hat{S}_{harmo}(k, f)$, qu'il soit obtenu par une non linéarité temporelle ou par une convolution circulaire fréquentielle, possède des harmoniques là ou celles de $\hat{S}_1(k, f)$ ont été détruites ou dégradées. Il constitue en lui-même une bonne estimation du peigne harmonique du signal débruité, dans lequel les harmoniques sont préservées aux mêmes positions que dans le signal utile. Cette estimation du peigne harmonique est particulièrement intéressante et peut être exploitée, notamment, mais non exclusivement, à des fins de débruitage.

De façon avantageuse, ce signal peut en outre permettre de calculer un filtre de réduction de bruit capable de préserver les harmoniques normalement détruites par les algorithmes classiques, comme cela est décrit ci-dessous.

On notera que la présente invention n'est pas limitée aux exemples décrits ci-dessus pour obtenir le signal $\hat{S}_{harmo}(k, f)$, Elle s'étend en effet à toute autre méthode visant à recréer les harmoniques supprimées par le filtre de réduction de bruit $H_1'(k,f)$.

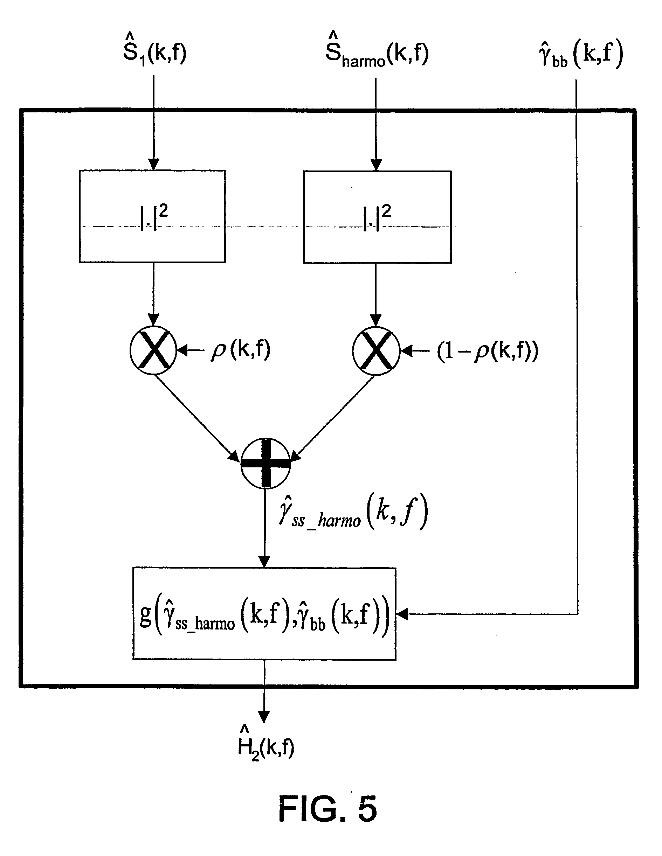

De façon avantageuse, un second filtre est ensuite estimé par le bloc fonctionnel 9 de la figure 2. La fonction de transfert de ce second filtre de réduction de bruit $\hat{H}_2(k, f)$ est estimée dans le domaine fréquentiel, comme illustré sur la figure 5, de la manière suivante, g représentant une fonction :

$$\hat{H}_2\left(k,f\right)=g\left(\hat{\gamma}_{ss\_harmo}\left(k,f\right),\hat{\gamma}_{bb}\left(k,f\right)\right).$$

Cette expression de la fonction de transfert du filtre est une expression mathématique qui dépend de la DSP du bruit $\hat{\gamma}_{bb}(k, f)$ et de celle du signal utile estimé grâce à l'étape de restauration harmonique, soit :

$$\hat{\gamma}_{ss\_harmo}(k,f) = \rho(k,f)\left|\hat{S}_1(k,f)\right|^2 + (1 - \rho(k,f))\left|\hat{S}_{harmo}(k,f)\right|^2.$$

Le paramètre $\rho(k, f)$ est utilisé pour contrôler le niveau de réinjection du signal $\hat{S}_{harmo}(k, f)$ dans le calcul de la DSP $\hat{\gamma}_{ss\_harmo}(k, f)$ en fonction de la non linéarité NL qui a été choisie pour créer le signal $\hat{S}_{harmo}(k, f)$. On notera que ce paramètre peut être fixe ou bien dépendre de la fréquence et/ou du temps.

La fonction g peut être choisie pour que $\hat{H}_2(k, f)$ mette en oeuvre par exemple la règle de soustraction spectrale en puissance (équation (1)), la règle de soustraction spectrale en amplitude (équation (2)), ou encore celle du filtre de Wiener en boucle ouverte (équation (3)). Toute autre règle de suppression de bruit en fréquence peut bien sûr être mise en oeuvre pour estimer $\hat{H}_2(k, f)$.

Cette fonction de transfert de réduction de bruit, $\hat{H}_2(k, f)$, possède l'avantage de préserver les harmoniques du signal qui sont normalement détruites par les techniques classiques de réduction de bruit. Ceci limite donc les distorsions du signal débruité. Il faut aussi noter que ce filtre conserve les bonnes propriétés du filtre $\hat{H}_1(k, f)$, c'est-à-dire un bon suivi des non stationnarités et très peu de bruit musical résiduel.

Un second filtrage est ensuite réalisé par le bloc fonctionnel 10 du dispositif 1, sur la base du second filtre de réduction de bruit estimé. Ainsi, comme pour la première fonction de transfert, on obtient la réponse impulsionnelle $\hat{h}_2$ $(k, n)$ (temporelle) équivalente à la fonction de transfert du filtre de réduction de bruit $\hat{H}_2(k, f)$ (fréquentielle), au moyen d'une transformée de Fourier discrète inverse (TFDL), c'est-à-dire :

$$\hat{h}_2(k,n) = TFDI\left(\hat{H}_2(k,f)\right).$$

Cette réponse impulsionnelle est ensuite avantageusement limitée temporellement en sélectionnant et pondérant les $L_{filt2}$ coefficients les plus significatifs par une fenêtre $w_{filt2}$, soit :

$$\hat{h}'_2(k,n) = w_{filt2}(n)\hat{h}_2(k,n).$$

La fonction de transfert du filtre de réduction de bruit $\hat{H}'_2(k,f)$ est ensuite obtenue par transformée de Fourier discrète (TFD) :

$$\hat{H}'_2(k,f) = TFD\left(\hat{h}'_2(k,n)\right).$$

Finalement, la trame fréquentielle débruitée est obtenue par filtrage fréquentiel, c'est-à-dire en multipliant le spectre du signal bruité et la fonction de transfert du filtre de réduction de bruit, soit :

$$\hat{S}_2(k,f) = \hat{H}'_2(k,f)X(k,f).$$

Cette étape de filtrage fréquentiel peut également être réalisée de façon équivalente par un filtrage temporel, c'est-à-dire en filtrant directement $x_w(k, n)$ par $\hat{h}'_2(k,n)$. Dans ce cas, on obtient directement le signal $\hat{s}(k,n)$ dans le domaine temporel.

Lorsque le filtrage est effectué dans le domaine fréquentiel, il convient alors de revenir dans le domaine temporel. Ceci est réalisé par le bloc fonctionnel 11 du dispositif 1, par application d'une transformée spectrale inverse (TFDI), soit :

$$\hat{s}(k,n) = TFDI\left(\hat{S}_2(k,f)\right).$$

Le signal de sortie débruité est ensuite avantageusement synthétisé par une technique de recouvrement et d'addition de blocs (OLA pour "overlap add") ou bien encore une technique de sauvegarde de blocs (OLS pour "overlap save"). Cette opération de reconstruction du signal dans le domaine temporel est appelée transformation de Fourier à court terme inverse (TFCTI).

A l'issue de ces étapes, on obtient la trame 12 en sortie du dispositif 1. Cette trame de sortie 12 est une estimation débruitée de la trame d'entrée 2, dans laquelle la distorsion est limitée.

Dans la suite de la description, on décrit des choix avantageux de mise en oeuvre de l'invention. Ces choix sont des exemples de réalisation et ne doivent pas être considérés comme ayant un caractère limitatif.

Pour la mise en oeuvre de l'analyse et la synthèse réalisées par les blocs fonctionnels 3 et 11 du dispositif 1, on choisit avantageusement la technique OLA. Il existe par ailleurs un recouvrement entre les trames analysées. Par exemple, un taux de recouvrement de 50% peut être choisi. La trame courante 2 du signal bruité x(k,n) {n = 0, ..., L-1}, de longueur L, est dans un premier temps multipliée par une fenêtre de pondération w(n) qui délivre le signal $x_w(k,n)$ :

$$x_w(k,n) = w(n)x(k,n).$$

Dans l'exemple, la fenêtre utilisée est une fenêtre de Hanning de taille L:

$$w(n) = 0.5 - 0.5 \; \cos\left(\frac{\pi n}{L}\right) \quad n = 0, \cdots, L-1 \quad ,$$

où L = 256, ce qui correspond à des trames de longueur 32 ms à la fréquence d'échantillonnage Fe = 8 kHz.

Le passage dans le domaine fréquentiel est réalisé avantageusement en utilisant la transformée de Fourier rapide (TFR), version optimisée numériquement de la transformée de Fourier discrète (TFD). Pour avoir une meilleure résolution fréquentielle et pour satisfaire les contraintes de convolution linéaire, on utilise une TFR de longueur $L_{TFR}$ = 512. Il est donc nécessaire au préalable de prolonger le bloc fenêtré $x_w(k, n)$ par 256 échantillons nuls ("zero-padding") :

$$x_{TFR}(k,n) = \begin{cases} x_w(k,n), & n = 0, \cdots, L-1 \\ 0, & n = L, \cdots, L_{TFR} - 1 \end{cases}.$$

La TFR X(k,f) de la trame d'entrée est alors obtenue par :

$$X(k,f) = TFR\left(x_{TFR}(k,n)\right).$$

Une détection d'activité vocale peut être réalisée, de façon optionnelle, par le bloc fonctionnel 4.

Pour ce qui est de l'estimation de la densité spectrale de puissance de bruit $\hat{\gamma}_{bb}(k_b, f)$, réalisée par le bloc fonctionnel 5, on peut alors procéder avantageusement de la manière suivante. Pour chaque trame $k_b$ de "bruit seul" détectée par la DAV, la densité spectrale de puissance de bruit $\hat{\gamma}_{bb}(k_b, f)$ est estimée par l'expression récursive suivante :

$$\hat{\gamma}_{bb}(k_b,f) = \alpha \hat{\gamma}_{bb}(k_b - 1, f) + (1-\alpha)\left|X\left(k_b,f\right)\right|^2.$$

Si la trame courante n'est pas détectée comme une trame de bruit, alors l'estimation de la densité spectrale de puissance du bruit est figée. La grandeur de lissage α est choisie constante et égale à α=0,8825, ce qui correspond à une constante de temps de 128 ms (compte tenu du recouvrement de 50% et de la fréquence d'échantillonnage Fe = 8 kHz), jugée suffisante pour assurer un compromis entre une estimation fiable et un suivi des variations temporelles des statistiques du bruit.

La fonction de transfert $\hat{H}_{step1}(k, f)$ du premier filtre de réduction de bruit estimé par le bloc fonctionnel 7 est avantageusement celle d'un filtre de Wiener en boucle ouverte tel que :

$$\hat{H}_{step1}(k,f) = \frac{\eta(k,f)}{1+\eta(k,f)},$$

où $\eta(k, f)$ représente le rapport signal à bruit (RSB) a priori défini théoriquement par le rapport des estimations des DSP du signal utile $\hat{\gamma}_{ss}(k, f)$ et du bruit $\hat{\gamma}_{bb}(k, f)$, c'est-à-dire :

$$\eta(k,f) = \frac{\hat{\gamma}_{ss}(k,f)}{\hat{\gamma}_{bb}(k,f)}.$$

La DSP du signal utile $\hat{\gamma}_{ss}(k, f)$ est obtenue avantageusement en utilisant un estimateur à décision dirigée, soit :

$$\hat{\gamma}_{ss}(k,f) = \beta \left|\hat{S}(k-1,f)\right|^2 + (1-\beta)\ P\left[\left|X(k,f)\right|^2 - \hat{\gamma}_{bb}(k,f)\right],$$

où le paramètre barycentrique β est choisi constant et égal à β = 0,98. Comme indiqué plus haut, la fonction P assure le seuillage de la grandeur pondérée par (1-β) :

$$P\left[z(k,f)\right] = \begin{cases} z(k,f) & \text{si } z(k,f) > 0 \\ 0 & \text{sinon} \end{cases}.$$

La fonction de transfert $\hat{H}_{step1}(k, f)$ est ensuite avantageusement réutilisée pour affiner l'estimation de la DSP du signal utile $\hat{\gamma}_{ss}(k, f)$. On obtient ainsi la grandeur $\hat{\gamma}_{ss2}(k, f)$ donnée par :

$$\hat{\gamma}_{ss2}(k,f) = \left|\hat{H}_{step1}(k,f) X(k,f)\right|^2,$$

qui est utilisée pour faire une seconde estimation du rapport signal à bruit a priori $\eta_2(k, f)$, donnée par :

$$\eta_2(k,f) = \frac{\hat{\gamma}_{ss2}(k,f)}{\hat{\gamma}_{bb}(k,f)}.$$

Une deuxième passe consiste alors avantageusement au calcul de l'estimateur de la fonction de transfert $\hat{H}_1(k, f)$ du premier filtre de réduction de bruit à partir de $\eta_2(k, f)$, soit :

$$\hat{H}_1(k,f) = \frac{\eta_2(k,f)}{1+\eta_2(k,f)}.$$

Le filtrage réalisé par le bloc fonctionnel 6 peut alors être réalisé comme indiqué ci-après. La fonction de transfert du filtre de réduction de bruit $\hat{H}_1(k, f)$ (fréquentielle) étant disponible, on obtient la réponse temporelle $\hat{h}_1(k,n)$ correspondante en utilisant avantageusement la transformée de Fourier rapide inverse (TFRI), qui est une version optimisée numériquement de la transformée de Fourier discrète inverse (TFDI), soit :

$$\hat{h}_1(k,n) = TFRI\left(\hat{H}_1(k,f)\right).$$

Du fait que le signal $\hat{h}_1(k,n)$ soit réel, on rend dans un premier temps causal le filtre temporel correspondant. On sélectionne ensuite les $L_{filt1}$=256 coefficients de ce filtre correspondant aux échantillons significatifs pour l'application envisagée. La réponse impulsionnelle ainsi obtenue est ensuite pondérée par une fenêtre de Hanning de longueur $L_{filt1}$. Finalement, la réponse impulsionnelle pondérée est complétée par $L_{TFR}$-$L_{filt1}$ zéros, pour donner la réponse impulsion-nelle $\hat{\tilde{h}}_1(k,n)$ qui respecte la contrainte de convolution linéaire sans repliement.

La fonction de transfert du filtre de réduction de bruit $\hat{H}_1'(k,f)$ est ensuite obtenue en utilisant avantageusement la transformée de Fourier rapide (TFR), version optimisée numériquement de la transformée de Fourier discrète (TFD), soit :

$$\hat{H}_1'(k,f) = TFR\left(\hat{\tilde{h}}_1(k,n)\right).$$

Finalement, la première version débruitée du signal bruité est obtenue par filtrage fréquentiel, c'est-à-dire en multipliant le spectre du signal bruité et la fonction de transfert du filtre de réduction de bruit :

$$\hat{S}_1(k,f) = \hat{H}_1'(k,f)X(k,f).$$

Dans l'étape de restauration des harmoniques perdues effectuée par le bloc fonctionnel 8, le signal $\hat{S}_1(k, f)$ est ensuite utilisé pour créer le signal artificiel $\hat{S}_{harmo}(k, f)$. Dans un premier temps, le signal temporel $\hat{s}_1(k,n)$ est obtenu en utilisant avantageusement la transformée de Fourier rapide inverse (TFRI) :

$$\hat{s}_1(k,n) = TFRI\left(\hat{S}_1(k,f)\right).$$

Ensuite, on applique à ce signal la fonction non linéaire de redressement mono alternance qui a pour but de lui redonner de l'harmonicité, soit :

$$\hat{s}_{harmo}(k,n) = \max\left(\hat{s}_1(k,n),0\right).$$

Bien entendu, tout autre non linéarité que le redressement mono alternance peut être utilisée comme indiqué plus haut (valeur absolue, maximum/minimum par rapport à un seuil, etc.). Finalement, on obtient le signal $\hat{S}_{harmo}(k, f)$

en utilisant avantageusement la transformée de Fourier rapide (TFR), soit :

$$\hat{S}_{harmo}(k,f) = TFR\big(\hat{s}_{harmo}(k,n)\big).$$

Ce signal est ensuite mis à profit pour calculer avantageusement la fonction de transfert d'un second filtre de réduction de bruit.

Dans le présent exemple de réalisation, l'estimation d'un tel second filtre est réalisée par le bloc fonctionnel 9 du dispositif 1 de la façon suivante. La fonction de transfert du second filtre de réduction de bruit $\hat{H}_2(k, f)$ est celle d'un filtre de Wiener en boucle ouverte tel que :

$$\hat{H}_2(k,f) = \frac{\eta_{harmo}(k,f)}{1+\eta_{harmo}(k,f)},$$

où $\eta_{harmo}(k, f)$ représente le rapport signal à bruit (RSB) a priori défini théoriquement par le rapport des estimations de la DSP du signal utile $\hat{\gamma}_{ss\_harmo}(k, f)$ et de la DSP du bruit $\hat{\gamma}_{bb}(k, f)$, soit :

$$\eta_{harmo}(k,f) = \frac{\hat{\gamma}_{ss\_harmo}(k,f)}{\hat{\gamma}_{bb}(k,f)},$$

où la DSP du signal utile $\hat{\gamma}_{ss\_harmo}(k, f)$ est obtenue ainsi:

$$\hat{\gamma}_{ss\_harmo}(k,f) = \rho(k,f)\left|\hat{S}_1(k,f)\right|^2 + (1-\rho(k,f))\left|\hat{S}_{harmo}(k,f)\right|^2.$$

Le paramètre p(k,f) de contrôle du niveau de réinjection du signal $\hat{S}_{harmo}(k, f)$ est choisi fixe et égal à 0,5 pour l'application envisagée.

La fonction de transfert du filtre de réduction de bruit $\hat{H}_2(k, f)$ (fréquentielle) étant disponible, on obtient la réponse temporelle $\hat{h}_2(k, n)$ correspondante en utilisant avantageusement la transformée de Fourier rapide inverse (TFRI), version optimisée numériquement de la transformée de Fourier discrète inverse (TFDI) :

$$\hat{h}_2(k,n) = TFRI\big(\hat{H}_2(k,f)\big).$$

Du fait que le signal $\hat{h}2(k, n)$ soit réel, on rend dans un premier temps causal le filtre temporel correspondant. On sélectionne ensuite les $L_{filt2} = 256$ coefficients de ce filtre correspondant aux échantillons significatifs pour cette application. La réponse impulsionnelle ainsi obtenue est ensuite pondérée par une fenêtre de Hanning de longueur $L_{filt2}$. Finalement, la réponse impulsionnelle pondérée est complétée par $L_{TFR} - L_{filt2}$ zéros pour donner la réponse impulsionnelle $\hat{\tilde{h}}_2(k,n)$ qui respecte la contrainte de convolution linéaire sans repliement.

La fonction de transfert du filtre de réduction de bruit $\hat{H}'_2(k,f)$ est ensuite obtenue en utilisant avantageusement la transformée de Fourier rapide (TFR), version optimisée numériquement de la transformée de Fourier discrète (TFD) :

$$\hat{H}'_2(k,f) = TFR\left(\hat{h}'_2(k,n)\right).$$

Les valeurs du module du filtre de réduction de bruit $\hat{H}'_2(k,f)$ peuvent éventuellement être seuillées pour éviter une réduction de bruit trop agressive.

Finalement, la trame fréquentielle débruitée est obtenue par filtrage fréquentiel réalisé par le bloc fonctionnel 10, c'est-à-dire en multipliant le spectre du signal bruité et la fonction de transfert du filtre de réduction de bruit, soit:

$$\hat{S}_2(k,f) = \hat{H}'_2(k,f)X(k,f).$$

Le retour dans le domaine temporel du signal ainsi obtenu est ensuite effectué, au niveau du bloc fonctionnel 11, par transformée spectrale inverse, en utilisant avantageusement la transformée de Fourier rapide inverse (TFRI), c'est-à-dire :

$$\hat{s}(k,n) = TFDI\left(\hat{S}_2(k,f)\right).$$

Le signal de sortie débruité est ensuite synthétisé par la technique OLA de recouvrement et d'addition de blocs.

On notera en outre que le dispositif 1 illustré sur la figure 2 peut être placé dans un équipement particulier, en fonction de l'application visée, tel qu'un équipement de prise de son, un équipement de communication ou encore un équipement de reconnaissance vocale.

On notera en outre que le traitement mis en oeuvre par le dispositif pourra être effectué de façon locale, comme dans le cas d'un terminal de communication par exemple, ou bien de façon centralisée dans un réseau, par exemple dans le cas d'un serveur de reconnaissance vocale.

Par ailleurs, de manière pratique, un dispositif 1 de traitement de signaux sonores bruités, selon l'invention, est constitué de moyens matériels (électroniques) et/ou logiciels adaptés à mettre en oeuvre un procédé de traitement d'un signal, selon l'invention.

Selon une implémentation préférée, les étapes du procédé de traitement d'un signal sonore bruité, selon l'invention, sont déterminées par les instructions d'un programme d'ordinateur utilisé dans un tel équipement selon l'invention.

Le procédé selon l'invention est alors mis en oeuvre lorsque le programme précité est chargé dans des moyens informatiques incorporés dans l'équipement, et dont le fonctionnement est alors commandé par l'exécution du programme.

On entend ici par "programme d'ordinateur" un ou plusieurs programmes d'ordinateur formant un ensemble (logiciel) dont la finalité est la mise en oeuvre de l'invention, lorsqu'il est exécuté par des moyens informatiques appropriés.

En conséquence, l'invention a également pour objet un tel programme d'ordinateur, en particulier sous la forme d'un logiciel stocké sur un support d'informations. Un tel support d'informations peut être constitué par n'importe quelle entité ou dispositif capable de stocker un programme selon l'invention.

Par exemple, le support en question peut comporter un moyen de stockage matériel, tel qu'une ROM, par exemple un CD ROM ou une ROM de circuit microélectronique, ou encore un moyen d'enregistrement magnétique, par exemple un disque dur. En variante, le support d'informations peut être un circuit intégré dans lequel le programme est incorporé, le circuit étant adapté pour exécuter ou pour être utilisé dans l'exécution du procédé en question.

D'autre part, le support d'informations peut être aussi un support immatériel transmissible, tel qu'un signal électrique ou optique pouvant être acheminé via un câble électrique ou optique, par radio ou par d'autres moyens. Un programme selon l'invention peut être en particulier téléchargé sur un réseau de type Internet.

D'un point de vue conception, un programme d'ordinateur selon l'invention peut utiliser n'importe quel langage de programmation et être sous la forme de code source, code objet, ou de code intermédiaire entre code source et code objet (par exemple une forme partiellement compilée), ou dans n'importe quelle autre forme souhaitable pour implémenter un procédé selon l'invention.

**Revendications**

1. Procédé de traitement d'un signal sonore bruité (x(n)) organisé en trames successives, comprenant les étapes suivantes relativement à au moins une desdites trames (x(k,n)) :

   - appliquer à ladite trame du signal sonore bruité une transformée vers le domaine fréquentiel ;
   - estimer une densité spectrale de puissance du bruit pour ladite trame ($\gamma_{bb}(k, f)$);
   - calculer un premier filtre de réduction de bruit ($\hat{H}_1(k, f)$) à partir de la densité spectrale de puissance du bruit estimée et d'une estimation de la densité spectrale de puissance d'un signal utile correspondant à ladite trame ;
   - filtrer ladite trame du signal sonore bruité (x(k,n);X(k,f)) à l'aide du premier filtre de réduction de bruit calculé, pour obtenir une première estimation débruitée de ladite trame ($\hat{S}_1$(k, f)) ; et **caractérisé par** l'étape :
   - effectuer un traitement de regénération d'harmonicité de la première estimation débruitée de ladite trame du signal sonore bruité pour obtenir une trame d'un second signal ($\hat{S}_{harmo}(k, f)$) comprenant des harmoniques sensiblement aux mêmes positions que le signal utile correspondant à ladite trame du signal sonore bruité.

2. Procédé selon la revendication 1, comprenant en outre les étapes suivantes :

   - calculer un second filtre de réduction de bruit ($\hat{H}_2(k, f)$) à partir de la densité spectrale de puissance du bruit estimée et d'une combinaison des puissances de la première estimation débruitée de ladite trame ($\hat{S}_1(k, f)$) et de la trame du second signal obtenue ($\hat{S}_{harmo}(k, f)$) ;
   - filtrer ladite trame du signal sonore bruité (x(k, n);X(k, f)), à l'aide du second filtre de réduction de bruit calculé, pour obtenir une seconde estimation débruitée de ladite trame ($\hat{S}_2(k, f)$) ; et
   - synthétiser la seconde estimation débruitée de ladite trame.

3. Procédé selon la revendication 2, dans lequel, lorsque le résultat du filtrage effectué à l'aide du second filtre de réduction de bruit est dans le domaine fréquentiel, on applique au résultat dudit filtrage une transformée vers le domaine temporel, avant de synthétiser la seconde estimation débruitée de ladite trame.

4. Procédé selon l'une quelconque des revendications précédentes, dans lequel on multiplie ladite trame du signal sonore bruité (x(k,n)) par une fenêtre de pondération (w(n)) avant de lui appliquer une transformée vers le domaine fréquentiel.

5. Procédé selon la revendication 4, dans lequel ladite fenêtre de pondération est une fenêtre de Hanning ayant pour taille la longueur L de ladite trame du signal sonore bruité.

6. Procédé selon la revendication 5, dans lequel ladite fenêtre de pondération est de la forme

$$\mathbf{w(n) = 0,5 - 0,5.\cos\left(\frac{\pi n}{L}\right)},$$ où n est un entier allant de 0 à L-1 et où L est égal à 256.

7. Procédé selon l'une quelconque des revendications précédentes, dans lequel ladite transformée vers le domaine fréquentiel appliquée à ladite trame du signal sonore bruité (x(k,n)) est une transformée de Fourier rapide de longueur 512.

8. Procédé selon l'une quelconque des revendications précédentes, dans lequel on recherche une activité vocale dans ladite trame du signal sonore bruité (x(k,n)), et dans lequel l'estimation de la densité spectrale de puissance du bruit pour ladite trame ($\gamma_{bb}(k, f)$) correspond à une estimation de la densité spectrale de puissance du bruit inclus dans ladite trame lorsque aucune activité vocale n'est détectée dans ladite trame et à une estimation de la densité spectrale de puissance du bruit inclus dans au moins une trame du signal sonore bruité précédant ladite trame lorsqu'une activité vocale est détectée dans ladite trame.

9. Procédé selon la revendication 8, dans lequel la densité spectrale de puissance du bruit inclus dans au moins une trame d'indice $k_b$ du signal sonore bruité dans laquelle aucune activité vocale est détectée est réalisée par lissage exponentiel de la forme $\hat{\gamma}_{bb}(k_b, f) = \alpha\hat{\gamma}_{bb}(k_b\text{-}1, f)+(1-\alpha)|X(k_b, f)|^2$, où $X(k_b,f)$ représente la transformée vers le domaine fréquentiel de la trame d'indice $k_b$ du signal sonore bruité et $\alpha$ est une grandeur de lissage.

10. Procédé selon l'une quelconque des revendications précédentes, dans lequel le calcul du premier filtre de réduction de bruit comprend une première passe mettant en oeuvre une technique d'atténuation spectrale à court-terme.

11. Procédé selon la revendication 10, dans lequel le calcul du premier filtre de réduction de bruit comprend une première passe mettant en oeuvre un filtre de Wiener en boucle ouverte ayant une fonction de transfert de la forme

$$\hat{H}_{step1}(k,f) = \frac{\eta(k,f)}{1+\eta(k,f)}$$, où k est un indice de ladite trame du signal sonore bruité et $\eta(k, f)$ représente un rapport de l'estimation de la densité spectrale de puissance du signal utile correspondant à ladite trame par la densité spectrale de puissance du bruit estimée.

12. Procédé selon la revendication 11, dans lequel l'estimation de la densité spectrale de puissance d'un signal utile correspondant à ladite trame comprend une estimation à décision dirigée de la forme $\hat{\gamma}_{ss}(k, f)=\beta|\hat{S}(k\text{-}1, f)|^2+(1\text{-}\beta)$ $P$ $[|X(k, f)|^2\text{-}\hat{\gamma}_{bb}(k, f)]$, où $\beta$ est un paramètre barycentrique, ou une estimation à lissage exponentiel.

13. Procédé selon l'une quelconque des revendications 10 à 12, dans lequel le calcul du premier filtre de réduction de bruit comprend en outre une seconde passe mettant en oeuvre une technique d'atténuation spectrale à court-terme, et dans laquelle l'estimation de la densité spectrale de puissance du signal utile correspondant à ladite trame tient compte du calcul effectué lors de la première passe.

14. Procédé selon la revendication 13, dans lequel l'estimation de la densité spectrale de puissance du signal utile correspondant à ladite trame tenant compte du calcul effectué lors de la première passe est de la forme $\hat{\gamma}_{ss2}(k, f)$ $= |\hat{H}_{step1}(k, f)X(k, f)|^2$, où $\hat{H}_{step1}(k, f)$ représente une fonction de transfert calculée lors de la première passe et X(k, f) représente la transformée vers le domaine fréquentiel de ladite trame d'indice k du signal sonore bruité, et dans lequel le calcul du premier filtre de réduction de bruit comprend une seconde passe mettant en oeuvre un filtre de Wiener en boucle ouverte ayant une fonction de transfert de la forme $\hat{H}_1(k,f) = \frac{\eta_2(k,f)}{1+\eta_2(k,f)}.$, où $\eta_2(k, f)$

représente un rapport de l'estimation de la densité spectrale de puissance du signal utile correspondant à ladite trame tenant compte du calcul effectué lors de la première passe par la densité spectrale de puissance du bruit estimée.

15. Procédé selon l'une quelconque des revendications précédentes, dans lequel le filtrage de ladite trame du signal sonore bruité (x(k, n);X(k, f)) à l'aide du premier filtre de réduction de bruit est effectué sur la transformée vers le domaine fréquentiel de la dite trame (X(k, f)).

16. Procédé selon l'une quelconque des revendications précédentes, dans lequel le filtrage de ladite trame du signal sonore bruité (x(k, n);X(k, f)) à l'aide du premier filtre de réduction de bruit comprend une sélection de coefficients dudit premier filtre de réduction de bruit et une pondération de la réponse impulsionnelle temporelle dudit premier filtre de réduction de bruit.

17. Procédé selon la revendication 16, dans lequel on sélectionne 256 coefficients du premier filtre de réduction de bruit que l'on pondère par une fenêtre de Hanning.

18. Procédé selon la revendication 17, dans lequel ladite transformée vers le domaine fréquentiel appliquée à ladite trame du signal sonore bruité est une transformée de Fourier rapide de longueur 512 et dans lequel la réponse impulsionnelle temporelle dudit premier filtre de réduction de bruit ($x_w(k,n)$) est complétée par 256 zéros.

19. Procédé selon l'une quelconque des revendications précédentes, dans lequel l'obtention d'une trame d'un second signal ($\hat{s}_{harmo}(k, n)$) comprenant des harmoniques sensiblement aux mêmes positions que le signal utile correspondant à ladite trame du signal sonore bruité comprend l'application d'une fonction non linéaire à la première estimation débruitée de ladite trame du signal sonore bruité ($\hat{s}_1(k, n)$) lorsque ladite première estimation est dans le domaine temporel, et l'application d'une convolution circulaire entre la première estimation débruitée de ladite trame du signal sonore bruité ($\hat{S}_1(k, f)$) et d'une transformée dans le domaine fréquentiel d'une fonction non linéaire (d(k,n)) lorsque ladite première estimation est dans le domaine fréquentiel.

20. Procédé selon la revendication 19, dans lequel ladite fonction non linéaire (d(k,n)) est l'une parmi : une fonction de redressement mono alternance, une valeur absolue, un maximum entre ladite première estimation débruitée de ladite trame du signal sonore bruité et un seuil, et un minimum entre ladite première estimation débruitée de ladite trame du signal sonore bruité et un seuil.

**21.** Procédé selon l'une quelconque des revendications 2 à 20, dans lequel le calcul du second filtre de réduction de bruit ($\hat{H}_2(k, f)$) met en oeuvre une technique d'atténuation spectrale à court-terme.

**22.** Procédé selon la revendication 21, dans lequel le calcul du second filtre de réduction de bruit met en oeuvre un filtre de Wiener en boucle ouverte ayant une fonction de transfert de la forme $\hat{H}_2(k,f) = \dfrac{\eta_{harmo}(k,f)}{1+\eta_{harmo}(k,f)}$

avec $\eta_{harmo}(k,f) = \dfrac{\hat{\gamma}_{ss\_harmo}(k,f)}{\hat{\gamma}_{bb}(k,f)}$ et $\hat{\gamma}_{ss\_harmo}(k, f) = \rho(k, f)|\hat{S}_1(k, f)|^2+(1- \rho(k, f))|\hat{S}_{harmo}(k, f)|^2$, où $\hat{S}_1(k, f)$ représente la première estimation débruitée de ladite trame d'indice k, $\hat{S}_{harmo}(k, f)$ représente la trame du second signal et ρ(k,f) est un paramètre de réinjection du second signal.

**23.** Procédé selon la revendication 22, dans lequel ρ(k,f) varie en fonction de la fréquence et/ou du temps.

**24.** Procédé selon l'une quelconque des revendications précédentes, dans lequel le filtrage de ladite trame du signal sonore bruité (x(k,n);X(k,f)) à l'aide du second filtre de réduction de bruit est effectué sur la transformée vers le domaine fréquentiel de la dite trame (X(k,f)).

**25.** Procédé selon l'une quelconque des revendications 2 à 24, dans lequel le filtrage de ladite trame du signal sonore bruité (x(k,n);X(k,f)) à l'aide du second filtre de réduction de bruit comprend une sélection et une pondération de la réponse impulsionnelle temporelle dudit second filtre de réduction de bruit.

**26.** Procédé selon la revendication 25, dans lequel on sélectionne 256 coefficients du second filtre de réduction de bruit que l'on pondère par une fenêtre de Hanning.

**27.** Procédé selon la revendication 26, dans lequel ladite transformée vers le domaine fréquentiel appliquée à ladite trame du signal sonore bruité est une transformée de Fourier rapide de longueur 512 et dans lequel la réponse impulsionnelle temporelle dudit second filtre de réduction de bruit est complétée par 256 zéros.

**28.** Procédé selon l'une quelconque des revendications 2 à 27, dans lequel la synthèse de la seconde estimation débruitée de ladite trame utilise un recouvrement et une addition de blocs OLA ou une sauvegarde de blocs OLS.

**29.** Dispositif (1) de traitement de signaux sonores bruités, comprenant des moyens agencés pour mettre en oeuvre le procédé selon l'une quelconque des revendications précédentes.

**30.** Equipement de prise de son incorporant le dispositif selon la revendication 29.

**31.** Equipement de communication incorporant le dispositif selon la revendication 29.

**32.** Equipement de reconnaissance vocale incorporant le dispositif selon la revendication 29.

**33.** Programme d'ordinateur sur un support d'informations, **caractérisé en ce qu'**il comporte des instructions adaptées à la mise en oeuvre d'un procédé selon l'une quelconque des revendications 1 à 28, lorsque ledit programme est chargé et exécuté par des moyens informatiques.

**Claims**

**1.** Method of processing a noisy sound signal (x(n)) organized as successive frames, comprising the following steps relating to at least one of said frames (x(k,n)):

- applying a transform to the frequency domain to said frame of the noisy sound signal;
- estimating a power spectral density of the noise for said frame $(\hat{\gamma}_{bb}(k, f))$;
- calculating a first noise reduction filter $(\hat{H}_1(k, f))$ on the basis of the estimated power spectral density of the noise and of an estimate of the power spectral density of a useful signal corresponding to said frame;
- filtering said frame of the noisy sound signal (x(k,n); X(k,f)) with the aid of the first noise reduction filter calculated, to obtain a first denoised estimate of said frame $(\hat{S}_1(k, f))$; and **characterized by** the step of:
- performing a processing of the regeneration of harmonicity of the first denoised estimate of said frame of the noisy sound signal to obtain a frame of a second signal $(\hat{S}_{harmo}(k, f))$ comprising harmonics substantially at the same positions as the useful signal corresponding to said frame of the noisy sound signal.

2. Method according to Claim 1, furthermore comprising the following steps:

- calculating a second noise reduction filter $(\hat{H}_2(k, f))$ on the basis of the estimated power spectral density of the noise and of a combination of the powers of the first denoised estimate of said frame $(\hat{S}_1(k, f))$ and of the frame of the second signal obtained $(\hat{S}_{harmo}(k, f))$ ;
- filtering said frame of the noisy sound signal (x(k,n); X(k,f)), with the aid of the second noise reduction filter calculated, to obtain a second denoised estimate of said frame $(\hat{S}_2(k, f))$ ; and
- synthesizing the second denoised estimate of said frame.

3. Method according to Claim 2, in which, when the result of the filtering performed with the aid of the second noise reduction filter is in the frequency domain, a transform to the time domain is applied to the result of said filtering, before synthesizing the second denoised estimate of said frame.

4. Method according to any one of the preceding claims, in which said frame of the noisy sound signal (x(k,n)) is multiplied by a weighting window (w(n)) before applying a transform to the frequency domain thereto.

5. Method according to Claim 4, in which said weighting window is a Hanning window whose size is the length L of said frame of the noisy sound signal.

6. Method according to Claim 5, in which said weighting window is of the form $w(n) = 0.5 - 0.5 . \cos\left(\dfrac{\pi n}{L}\right)$, where n is an integer ranging from 0 to L-1 and where L is equal to 256.

7. Method according to any one of the preceding claims, in which said transform to the frequency domain applied to said frame of the noisy sound signal (x(k,n)) is a fast Fourier transform of length 512.

8. Method according to any one of the preceding claims, in which vocal activity is searched for in said frame of the noisy sound signal (x(k,n)), and in which the estimate of the power spectral density of the noise for said frame $(\hat{\gamma}_{bb}(k, f))$ corresponds to an estimate of the power spectral density of the noise included in said frame when no vocal activity is detected in said frame and to an estimate of the power spectral density of the noise included in at least one frame of the noisy sound signal preceding said frame when vocal activity is detected in said frame.

9. Method according to Claim 8, in which the power spectral density of the noise included in at least one frame of index $k_b$ of the noisy sound signal, in which frame no vocal activity is detected, is effected by exponential smoothing of the form $\hat{\gamma}_{bb}(k_b, f) = \alpha\gamma_{bb}(k_b-1, f)+(1-\alpha)|X(k_b, f)|^2$, where X $(k_b, f)$ represents the transform to the frequency domain of the frame of index $k_b$ of the noisy sound signal and $\alpha$ is a smoothing quantity.

10. Method according to any one of the preceding claims, in which the calculation of the first noise reduction filter comprises a first pass implementing a technique of short-term spectral attenuation.

11. Method according to Claim 10, in which the calculation of the first noise reduction filter comprises a first pass implementing an open-loop Wiener filter having a transfer function of the form $\hat{H}_{step1}(k,f) = \dfrac{\eta(k,f)}{1+\eta(k,f)}$,

where k is an index of said frame of the noisy sound signal and $\eta(k, f)$ represents a ratio of the estimate of the power spectral density of the useful signal corresponding to said frame by the estimated power spectral density of the noise.

**12.** Method according to Claim 11, in which the estimate of the power spectral density of a useful signal corresponding to said frame comprises a directed-decision estimate of the form $\hat{\gamma}_{ss}(k, f) = \beta|\hat{S}(k\text{-}1, f)|2+(1\text{-}\beta) P[|X(k, f)|2\text{-}\hat{\gamma}_{bb}(k, f)]$, where $\beta$ is a barycentric parameter, or an exponential-smoothing estimate.

**13.** Method according to any one of Claims 10 to 12, in which the calculation of the first noise reduction filter furthermore comprises a second pass implementing a technique of short-term spectral attenuation, and in which the estimate of the power spectral density of the useful signal corresponding to said frame takes account of the calculation performed during the first pass.

**14.** Method according to Claim 13, in which the estimate of the power spectral density of the useful signal corresponding to said frame taking account of the calculation performed during the first pass is of the form $\hat{\gamma}_{ss2}(k, f)=|\hat{H}_{step1}(k, f)X$ $(k, f)|2$, where $\hat{H}_{step1}(k, f)$ represents a transfer function calculated during the first pass and X(k,f) represents the transform to the frequency domain of said frame of index k of the noisy sound signal, and in which the calculation of the first noise reduction filter comprises a second pass implementing an open-loop Wiener filter having a transfer function of the form $\hat{H}_1(k,f) = \dfrac{\eta_2(k,f)}{1+\eta_2(k,f)}$, where $\eta_2(k, f)$ represents a ratio of the estimate of the power spectral density of the useful signal corresponding to said frame taking account of the calculation performed during the first pass by the estimated power spectral density of the noise.

**15.** Method according to any one of the preceding claims, in which the filtering of said frame of the noisy sound signal (x(k, n); X(k, f)) with the aid of the first noise reduction filter is performed on the transform to the frequency domain of said frame (X(k, f)).

**16.** Method according to any one of the preceding claims, in which the filtering of said frame of the noisy sound signal (x(k, n); X(k, f)) with the aid of the first noise reduction filter comprises a selection of coefficients of said first noise reduction filter and a weighting of the temporal impulse response of said first noise reduction filter.

**17.** Method according to Claim 16, in which 256 coefficients of the first noise reduction filter are selected and weighted by a Hanning window.

**18.** Method according to Claim 17, in which said transform to the frequency domain applied to said frame of the noisy sound signal is a fast Fourier transform of length 512 and in which the temporal impulse response of said first noise reduction filter ($x_w(k, n)$) is supplemented with 256 zeros.

**19.** Method according to any one of the preceding claims, in which the obtaining of a frame of a second signal ($\hat{s}_{harmo}$ $(k, n)$) comprising harmonics substantially at the same positions as the useful signal corresponding to said frame of the noisy sound signal comprises the application of a nonlinear function to the first denoised estimate of said frame of the noisy sound signal ($\hat{s}_1(k, n)$) when said first estimate is in the time domain, and the application of a circular convolution between the first denoised estimate of said frame of the noisy sound signal $(\hat{S}_1(k, f))$ and of a transform into the frequency domain of a nonlinear function (d(k, n)) when said first estimate is in the frequency domain.

**20.** Method according to Claim 19, in which said nonlinear function (d(k, n)) is one among: a single-wave rectification function, an absolute value, a maximum between said first denoised estimate of said frame of the noisy sound signal and a threshold, and a minimum between said first denoised estimate of said frame of the noisy sound signal and a threshold.

**21.** Method according to any one of Claims 2 to 20, in which the calculation of the second noise reduction filter ($\hat{H}_2(k, f)$) implements a technique of short-term spectral attenuation.

**22.** Method according to Claim 21, in which the calculation of the second noise reduction filter implements an open-loop Wiener filter having a transfer function of the form $\hat{H}_2(k,f) = \dfrac{\eta_{harmo}(k,f)}{1+\eta_{harmo}(k,f)}$ with

$$\eta_{harmo}(k,f) = \frac{\hat{\gamma}_{ss\_harmo}(k,f)}{\hat{\gamma}_{bb}(k,f)}$$ and $\hat{\gamma}_{ss\_harmo}(k, f) = \rho(k, f)|\hat{S}_1(k, f)|^2 + (1-\rho(k, f))|\hat{S}_{harmo}(k, f)|^2$, where $\hat{S}_1(k,$

f) represents the first denoised estimate of said frame of index k, $\hat{S}_{harmo}(k, f)$ represents the frame of the second signal and p(k,f) is a reinjection parameter for the second signal.

23. Method according to Claim 22, in which p(k, f) varies as a function of frequency and/or time.

24. Method according to any one of the preceding claims, in which the filtering of said frame of the noisy sound signal (x(k, n); X(k, f)) with the aid of the second noise reduction filter is performed on the transform to the frequency domain of said frame (X(k, f)).

25. Method according to any one of Claims 2 to 24, in which the filtering of said frame of the noisy sound signal (x(k, n); X(k, f)) with the aid of the second noise reduction filter comprises a selection and a weighting of the temporal impulse response of said second noise reduction filter.

26. Method according to Claim 25, in which 256 coefficients of the second noise reduction filter are selected and weighted by a Hanning window.

27. Method according to Claim 26, in which said transform to the frequency domain applied to said frame of the noisy sound signal is a fast Fourier transform of length 512 and in which the temporal impulse response of said second noise reduction filter is supplemented with 256 zeros.

28. Method according to any one of Claims 2 to 27, in which the synthesis of the second denoised estimate of said frame uses an OLA block overlap and add or an OLS block save.

29. Device (1) for processing noisy sound signals, comprising means designed to implement the method according to any one of the preceding claims.

30. Sound pick-up equipment incorporating the device according to Claim 29.

31. Communication equipment incorporating the device according to Claim 29.

32. Voice recognition equipment incorporating the device according to Claim 29.

33. Computer programme on an information medium, **characterized in that** it comprises instructions adapted for the implementation of a method according to any one of Claims 1 to 28, when said programme is loaded and executed by computing means.


**Patentansprüche**

1. Verfahren zur Verarbeitung eines in aufeinanderfolgenden Rahmen strukturierten, verrauschten Tonsignals (x(n)), das die folgenden Schritte bezüglich mindestens eines der Rahmen (x(k, n)) enthält:

   - Anwenden einer Transformation in den Frequenzbereich an den Rahmen des verrauschten Tonsignals;
   - Schätzen einer spektralen Leistungsdichte des Rauschens für den Rahmen ($\gamma_{bb}(k, f)$);
   - Berechnen eines ersten Rauschminderungsfilters ($\hat{H}_1(k, f)$) ausgehend von der geschätzten spektralen Leistungsdichte des Rauschens und von einer Schätzung der spektralen Leistungsdichte eines dem Rahmen entsprechenden Nutzsignals;
   - Filtern des Rahmens des verrauschten Tonsignals (x(k, n);X(k, f) mit Hilfe des ersten berechneten Rauschminderungsfilters, um eine erste entrauschte Schätzung des Rahmens ($\hat{S}_1(k, f)$) zu erhalten; und **gekennzeichnet durch** den Schritt:

- des Durchführens einer Verarbeitung zur Harmonizitäts-Regeneration der ersten entrauschten Schätzung des Rahmens des verrauschten Tonsignals, um einen Rahmen eines zweiten Signals ($\hat{S}_{harmo}(k, f)$) zu erhalten, der Harmonische im Wesentlichen an den gleichen Stellen wie das dem Rahmen des verrauschten Tonsignals entsprechende Nutzsignal enthält.

2. Verfahren nach Anspruch 1, das außerdem die folgenden Schritte enthält:

   - Berechnen eines zweiten Rauschminderungsfilters ($\hat{H}_2(k, f)$) ausgehend von der geschätzten spektralen Leistungsdichte des Rauschens und einer Kombination der Leistungen der ersten entrauschten Schätzung des Rahmens ($\hat{S}_1(k, f)$) und des erhaltenen Rahmens des zweiten Signals ($\hat{S}_{harmo}(k, f)$);
   - Filtern des Rahmens des verrauschten Tonsignals (x(k,n);X(k,f)) mit Hilfe des berechneten zweiten Rauschminderungsfilters, um eine zweite entrauschte Schätzung des Rahmens ($\hat{S}_2(k, f)$) zu erhalten; und
   - Synthetisieren der zweiten entrauschten Schätzung des Rahmens.

3. Verfahren nach Anspruch 2, bei dem, wenn das Ergebnis der mit Hilfe des zweiten Rauschminderungsfilters durchgeführten Filterung im Frequenzbereich liegt, an das Ergebnis der Filterung eine Transformation in den Zeitbereich angewendet wird, ehe die zweite entrauschte Schätzung des Rahmens synthetisiert wird.

4. Verfahren nach einem der vorhergehenden Ansprüche, bei dem der Rahmen des verrauschten Tonsignals (x(k, n)) mit einem Gewichtungsfenster (w(n)) multipliziert wird, ehe eine Transformation in den Frequenzbereich an ihn angewendet wird.

5. Verfahren nach Anspruch 4, bei dem das Gewichtungsfenster ein Hanning-Fenster ist, das als Größe die Länge L des Rahmens des verrauschten Tonsignals hat.

6. Verfahren nach Anspruch 5, bei dem das Gewichtungsfenster die Form $$w(n) = 0,5 - 0,5 \cdot \cos\left(\frac{\pi n}{L}\right)$$ hat, wobei n eine ganze Zahl ist, die von 0 bis L-1 geht, und wobei L gleich 256 ist.

7. Verfahren nach einem der vorhergehenden Ansprüche, bei dem die Transformation in den Frequenzbereich, die an den Rahmen des verrauschten Tonsignals (x(k, n)) angewendet wird, eine schnelle Fourier-Transformation der Länge 512 ist.

8. Verfahren nach einem der vorhergehenden Ansprüche, bei dem eine Sprachaktivität im Rahmen des verrauschten Tonsignals (x(k, n)) gesucht wird, und bei dem die Schätzung der spektralen Leistungsdichte des Rauschens für den Rahmen ($\gamma_{bb}(k, f)$) einer Schätzung der spektralen Leistungsdichte des im Rahmen enthaltenen Rauschens entspricht, wenn keine Sprachaktivität im Rahmen erfasst wird, und einer Schätzung der spektralen Leistungsdichte des in mindestens einem dem Rahmen vorausgehenden Rahmen des verrauschten Tonsignals enthaltenen Rauschens entspricht, wenn eine Sprachaktivität im Rahmen erfasst wird.

9. Verfahren nach Anspruch 8, bei dem die spektrale Leistungsdichte des Rauschens, das in mindestens einem Rahmen mit dem Index $k_b$ des verrauschten Tonsignals enthalten ist, in dem keine Sprachaktivität erfasst wird, durch exponentielles Glätten der Form $\hat{\gamma}_{bb}(k_b, f) = \alpha\hat{\gamma}_{bb}(k_b-1, f) + (1-\alpha)|X(k_b, f)|^2$ durchgeführt wird, wobei $X(k_b, f)$ die Transformation in den Frequenzbereich des Rahmens mit dem Index $k_b$ des verrauschten Tonsignals darstellt und $\alpha$ eine Glättungsgröße ist.

10. Verfahren nach einem der vorhergehenden Ansprüche, bei dem die Berechnung des ersten Rauschminderungsfilters einen ersten Durchgang enthält, der eine Technik der kurzfristigen spektralen Dämpfung anwendet.

11. Verfahren nach Anspruch 10, bei dem die Berechnung des ersten Rauschminderungsfilters einen ersten Durchgang enthält, der ein Wiener-Filter in offener Schleife verwendet, das eine Transferfunktion der Form $$\hat{H}_{step1}(k, f) = \frac{\eta(k, f)}{1 + \eta(k, f)}$$ hat, wobei k ein Index des Rahmens des verrauschten Tonsignals ist, und $\eta(k, f)$ ein

Verhältnis der Schätzung der spektralen Leistungsdichte des dem Rahmen entsprechenden Nutzsignals durch die geschätzte spektrale Leistungsdichte des Rauschens darstellt.

12. Verfahren nach Anspruch 11, bei dem die Schätzung der spektralen Leistungsdichte eines dem Rahmen entsprechenden Nutzsignals eine Schätzung mit gerichteter Entscheidung der Form $\hat{\gamma}_{ss}(k, f)=\beta|\hat{S}(k-1, f)|^2+(1-\beta)P[|X(k, f)|^2-\hat{\gamma}_{bb}(k, f)]$, wobei β ein baryzentrischer Parameter ist, oder eine Schätzung mit exponentieller Glättung enthält.

13. Verfahren nach einem der Ansprüche 10 bis 12, bei dem die Berechnung des ersten Rauschminderungsfilters außerdem einen zweiten Durchgang enthält, der eine Technik der kurzfristigen spektralen Dämpfung verwendet, und bei dem die Schätzung der spektralen Leistungsdichte des dem Rahmen entsprechenden Nutzsignals die beim ersten Durchgang durchgeführte Berechnung berücksichtigt.

14. Verfahren nach Anspruch 13, bei dem die Schätzung der spektralen Leistungsdichte des dem Rahmen entsprechenden Nutzsignals, die die beim ersten Durchgang durchgeführte Berechnung berücksichtigt, die Form $\hat{\gamma}_{ss2}(k, f)$ $=|\hat{H}_{step1}(k, f)X(k, f)|^2$ hat, wobei $\hat{H}_{step1}(k, f)$ eine beim ersten Durchgang berechnete Transferfunktion darstellt, und X(k, f) die Transformation in den Frequenzbereich des Rahmens mit dem Index k des verrauschten Tonsignals darstellt, und bei dem die Berechnung des ersten Rauschminderungsfilters einen zweiten Durchgang enthält, der ein Wiener-Filter in offener Schleife verwendet, das eine Transferfunktion der Form $\hat{H}_1(k, f) = \dfrac{\eta_2(k, f)}{1 + \eta_2(k, f)}$

hat, wobei $\eta_2(k, f)$ ein Verhältnis der Schätzung der spektralen Leistungsdichte des dem Rahmen entsprechendes Nutzsignals, die die im ersten Durchgang durchgeführte Berechnung berücksichtigt, durch die geschätzte spektrale Leistungsdichte des Rauschens darstellt.

15. Verfahren nach einem der vorhergehenden Ansprüche, bei dem die Filterung des Rahmens des verrauschten Tonsignals (x(k, n);X(k, f)) mit Hilfe des ersten Rauschminderungsfilters an der Transformation in den Frequenzbereich des Rahmens (X(k, f)) durchgeführt wird.

16. Verfahren nach einem der vorhergehenden Ansprüche, bei dem die Filterung des Rahmens des verrauschten Tonsignals (x(k, n);X(k, f)) mit Hilfe des ersten Rauschminderungsfilters eine Auswahl von Koeffizienten des ersten Rauschminderungsfilters und eine Gewichtung der zeitlichen Impulsantwort des ersten Rauschminderungsfilters enthält.

17. Verfahren nach Anspruch 16, bei dem 256 Koeffizienten des ersten Rauschminderungsfilters ausgewählt werden, die durch ein Hanning-Fenster gewichtet werden.

18. Verfahren nach Anspruch 17, bei dem die Transformation in den Frequenzbereich, die an den Rahmen des verrauschten Tonsignals angewendet wird, eine schnelle Fourier-Transformation der Länge 512 ist, und bei dem die zeitliche Impulsantwort des ersten Rauschminderungsfilters ($X_w$(k, n)) durch 256 Nullen vervollständigt wird.

19. Verfahren nach einem der vorhergehenden Ansprüche, bei dem der Erhalt eines Rahmens eines zweiten Signals ($\hat{S}_{harmo}$(k, n)), das Harmonische im Wesentlichen an den gleichen Stellen wie das dem Rahmen entsprechende Nutzsignal des verrauschten Tonsignals enthält, die Anwendung einer nicht-linearen Funktion an die erste entrauschte Schätzung des Rahmens des verrauschten Tonsignals ($\hat{S}_1$(k, n)) enthält, wenn die erste Schätzung im Zeitbereich ist, und die Anwendung einer zirkularen Faltung zwischen der ersten entrauschten Schätzung des Rahmens des verrauschten Tonsignals ($\hat{S}_1$(k, f)) und einer Transformation einer nicht-linearen Funktion (d(k, n)) in den Frequenzbereich enthält, wenn die erste Schätzung im Frequenzbereich ist.

20. Verfahren nach Anspruch 19, bei dem die nichtlineare Funktion (d(k, n)) eine ist von: einer Funktion der Einweg-Gleichrichtung, einem Absolutwert, einem Maximum zwischen der ersten entrauschten Schätzung des Rahmens des verrauschten Tonsignals und einer Schwelle, und einem Minimum zwischen der ersten entrauschten Schätzung des Rahmens des verrauschten Tonsignals und einer Schwelle.

21. Verfahren nach einem der Ansprüche 2 bis 20, bei dem die Berechnung des zweiten Rauschminderungsfilters ($\hat{H}_2$ (k, f)) eine Technik der kurzfristigen spektralen Dämpfung anwendet.

22. Verfahren nach Anspruch 21, bei dem die Berechnung des zweiten Rauschminderungsfilters ein Wiener-Filter in offener Schleife verwendet, das eine Transferfunktion der Form $\hat{H}_2(k,f) = \dfrac{\eta_{\text{harmo}}(k,f)}{1 + \eta_{\text{harmo}}(k,f)}$ mit

$$\eta_{\text{harmo}}(k,f) = \frac{\hat{\gamma}_{\text{ss\_harmo}}(k,f)}{\hat{\gamma}_{\text{bb}}(k,f)}$$ und $\hat{\gamma}_{\text{ss\_harmo}}(k,f) = \rho(k,f)|\hat{S}_1(k,f)|^2 + (1-\rho(k,f))|\hat{S}_{\text{harmo}}(k,f)|^2$ hat, wobei $\hat{S}_1(k,f)$ die erste entrauschte Schätzung des Rahmens mit dem Index k darstellt, $\hat{S}_{\text{harmo}}(k,f)$ den Rahmen des zweiten Signals darstellt, und $\rho(k,f)$ ein Parameter des Wiedereinspeisens des zweiten Signals ist.

23. Verfahren nach Anspruch 22, bei dem $\rho(k,f)$ in Abhängigkeit von der Frequenz und/oder von der Zeit variiert.

24. Verfahren nach einem der vorhergehenden Ansprüche, bei dem die Filterung des Rahmens des verrauschten Tonsignals (x(k, n);X(k, f)) mit Hilfe des zweiten Rauschminderungsfilters an der Transformation in den Frequenzbereich des Rahmens (X(k, f)) durchgeführt wird.

25. Verfahren nach einem der Ansprüche 2 bis 24, bei dem die Filterung des Rahmens des verrauschten Tonsignals (x(k, n);X(k, f)) mit Hilfe des zweiten Rauschminderungsfilters eine Auswahl und eine Gewichtung der zeitlichen Impulsantwort des zweiten Rauschminderungsfilters enthält.

26. Verfahren nach Anspruch 25, bei dem 256 Koeffizienten des zweiten Rauschminderungsfilters ausgewählt werden, die durch ein Hanning-Fenster gewichtet werden.

27. Verfahren nach Anspruch 26, bei dem die an den Rahmen des verrauschten Tonsignals angewendete Transformation in den Frequenzbereich eine schnelle Fourier-Transformation der Länge 512 ist, und bei dem die zeitliche Impulsantwort des zweiten Rauschminderungsfilters durch 256 Nullen vervollständigt wird.

28. Verfahren nach einem der Ansprüche 1 bis 27, bei dem die Synthese der zweiten entrauschten Schätzung des Rahmens eine Überlagerung und eine Hinzufügung von OLA-Blöcken oder ein Backup von OLS-Blöcken verwendet.

29. Vorrichtung (1) zur Verarbeitung von verrauschten Tonsignalen, die Einrichtungen enthält, welche ausgebildet sind, um das Verfahren nach einem der vorhergehenden Ansprüche auszuführen.

30. Tonaufnahmegerät, das die Vorrichtung nach Anspruch 29 enthält.

31. Kommunikationsgerät, das die Vorrichtung nach Anspruch 29 enthält.

32. Spracherkennungsgerät, das die Vorrichtung nach Anspruch 29 enthält.

33. Computerprogramm auf einem Informationsträger, **dadurch gekennzeichnet, dass** es Anweisungen enthält, die für die Durchführung eines Verfahrens nach einem der Ansprüche 1 bis 28 geeignet sind, wenn das Programm in EDV-Einrichtungen geladen und von ihnen ausgeführt wird.

FIG. 1

EP 1 789 956 B1

FIG. 2

$$\hat{S}_1(k,f)$$

FIG. 3

TFDI    13

$$\hat{s}_1(k,n)$$

NL (Non Linéarité)    14

$$\hat{s}_{harmo}(k,n)$$

TFD    15

$$\hat{S}_{harmo}(k,f)$$

(a) Spectre du signal utile non bruité

Amplitude (dB)

16

(b) Spectre du signal débruité par le premier filtre de réduction de bruit

Amplitude (dB)

17

(c) Spectre du signal auquel on a rendu de l'harmonicité

Amplitude (dB)

18

Fréquences discrètes

FIG. 4

EP 1 789 956 B1

$$\hat{S}_1(k,f) \qquad \hat{S}_{harmo}(k,f) \qquad \hat{\gamma}_{bb}(k,f)$$

$$|\cdot|^2 \qquad\qquad |\cdot|^2$$

$$\otimes \leftarrow \rho(k,f) \qquad \otimes \leftarrow (1-\rho(k,f))$$

$$\oplus$$

$$\hat{\gamma}_{ss\_harmo}(k,f)$$

$$g\left(\hat{\gamma}_{ss\_harmo}(k,f),\hat{\gamma}_{bb}(k,f)\right)$$

$$\hat{H}_2(k,f)$$

# FIG. 5

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2820227

- FR 2768546

**Littérature non-brevet citée dans la description**

- **J.S. Lim ; A.V. Oppenheim.** Enhancement and bandwidth compression of noisy speech. *Proceedings of the IEEE,* 1979, vol. 67, 1586-1604
- **R.E. Crochiere ; L.R. Rabiner.** Multirate digital signal processing. Prentice Hall, 1983
- **S.F. Boll.** Suppression of acoustic noise in speech using spectral subtraction. *IEEE Trans. on Audio, Speech and Signal Processing,* Avril 1979, vol. 27 (2), 113-120
- **O. Cappé.** Elimination of the musical noise phenomenon with the Ephraim and Malah noise suppressor. *IEEE Trans. on Speech and Audio Processing,* Avril 1994, vol. 2 (2), 345-349
- **M. Berouti et al.** Enhancement of speech corrupted by acoustic noise. *Int. Conf. on Speech, Signal Processing,* 1979, 208-211
- **P. Lockwood ; J. Boudy.** Experiments with a non-linear spectral subtractor, hidden Markov models and the projection for robust speech recognition in cars. *Proc. of EUSIPCO'91,* 1991, 79-82

- **R. Martin.** Spectral subtraction based on minimum statistics. *Signal Processing VII : Theories and Applications, EUSIPCO'94,* Septembre 1994, 1182-1185
- **Y. Ephraim ; D. Malah.** Speech enhancement using a minimun mean square error short-time spectral amplitude estimator. *IEEE Trans. on Audio, Speech and Signal Processing,* 1984, vol. 32 (6), 1109-1121
- **C. Plapous ; C. Marro ; L. Mauuary ; P. Scalart.** A Two-Step Noise Reduction Technique. *ICASSP,* Mai 2004
- **R.J. Mac Aulay ; M.L. Malpass.** Speech enhancement using a soft-decision noise suppression filter. *IEEE trans. on Audio, Speech and Signal Processing,* Avril 1980, vol. 28 (2), 137-145
- **Y. Ephraim ; D. Malah.** Speech enhancement using optimal non-linear spectral amplitude estimation. *Int. Conf. on Speech, Signal Processing,* 1983, 1118-1121